(19)

**Europäisches Patentamt**
**European Patent Office**
**Office européen des brevets**

(11)  **EP 4 572 440 A1**

(12)  **EUROPEAN PATENT APPLICATION**
published in accordance with Art. 153(4) EPC

(43) Date of publication:
**18.06.2025  Bulletin 2025/25**

(21) Application number: **23851867.4**

(22) Date of filing: **09.08.2023**

(51) International Patent Classification (IPC):
**H04W 64/00** (2009.01)

(52) Cooperative Patent Classification (CPC):
**H04W 64/00**

(86) International application number:
**PCT/CN2023/111919**

(87) International publication number:
**WO 2024/032646 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  CN 202210970532**

(71) Applicant: **Datang Mobile Communications
Equipment Co., Ltd.
Beijing 100085 (CN)**

(72) Inventors:
• **REN, Bin**
  **Beijing 100085 (CN)**
• **DA, Ren**
  **Beijing 100085 (CN)**
• **REN, Xiaotao**
  **Beijing 100085 (CN)**

(74) Representative: **Studio Torta S.p.A.
Via Viotti, 9
10121 Torino (IT)**

(54)  **MULTI-FREQUENCY POSITIONING METHOD, DEVICE AND APPARATUS, AND STORAGE MEDIUM**

(57)  Embodiments of the present invention provide a multi-frequency positioning method, device and apparatus, and a storage medium. The method comprises: a target terminal and/or a positioning reference unit (PRU) sending terminal capability information to a first positioning node, wherein the terminal capability information is used for indicating multi-frequency processing capability of the target terminal and/or the PRU; and receiving frequency configuration information sent by the first positioning node, and executing multi-frequency positioning according to a plurality of frequencies indicated by the frequency configuration information.

A target terminal and/or a positioning reference unit (PRU) transmits terminal capability information to a first positioning node, where the terminal capability information is used to indicate a multi-frequency processing capability of the target terminal and/or the PRU — 100

Receiving frequency configuration information transmitted from the first positioning node, and performing multi-frequency positioning based on multiple frequencies indicated by the frequency configuration information — 101

FIG. 1

EP 4 572 440 A1

**Description**

CROSS-REFERENCES TO RELATED APPLICATIONS

The present application claims priority to Chinese patent application No. 202210970532.2 filed on August 12, 2022, entitled "Multi-Frequency Positioning Method, Device and Apparatus, and Storage Medium", which is hereby incorporated by reference in its entirety.

FIELD

The present application relates to the field of radio communications, and in particular, to methods and apparatuses for multi-frequency positioning, devices and a storage medium.

BACKGROUND

The 3rd generation partnership project (3GPP) Rel-18 discusses a solution for single-shot based 5th generation (5G) new radio (NR) carrier phase positioning (CPP).
In the carrier phase positioning technology for global navigation satellite system (GNSS), a commonly used technology is to use a multi-frequency carrier phase measurement quantity obtained in single measurement time, solve integer ambiguity of each frequency through linear combination and a step-by-step ambiguity determination method, and further solve a location of a target terminal (user equipment, UE), which may effectively improve an integer ambiguity solving accuracy for carrier phase positioning and a terminal positioning accuracy.
However, unlike GNSS which uses code division multiple access (CMDA) signals (the carrier frequency of each CDMA signal is fixed and known), NR uses orthogonal frequency division multiplexing (OFDM) multi-carrier signals. A receiver may output a carrier phase measurement quantity of any frequency within a carrier bandwidth. The traditional GNSS carrier phase positioning technology cannot support NR multi-frequency carrier phase positioning.

BRIEF SUMMARY

Embodiments of the present application provide methods and apparatuses for multi-frequency positioning, devices and a storage medium to support new radio (NR) carrier phase positioning for multiple frequencies.
An embodiment of the present application provides a method for multi-frequency positioning, including:

a target terminal and/or a positioning reference unit (PRU) transmits terminal capability information to a first positioning node, where the terminal capability information is used to indicate a multi-frequency processing capability of the target terminal and/or the PRU; and

receiving frequency configuration information transmitted from the first positioning node, and performing multi-frequency positioning based on multiple frequencies indicated by the frequency configuration information.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, performing the multi-frequency positioning based on the multiple frequencies indicated by the frequency configuration information includes:

measuring downlink positioning reference signals based on the multiple frequencies indicated by the frequency configuration information; or

transmitting uplink positioning reference signals based on the multiple frequencies indicated by the frequency configuration information.

In some embodiments, after measuring the downlink positioning reference signals, the method further includes: transmitting first measurement reporting information, where the first measurement reporting information includes first measurement quantity information, measurement quality information and first assistance information.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, transmitting the first measurement reporting information includes:

the target terminal and the PRU transmit the first measurement reporting information to a location management function (LMF); or

the PRU transmits the first measurement reporting information to the target terminal.

In some embodiments, the PRU transmits the first measurement reporting information to the target terminal includes:

the PRU transmits the first measurement reporting information to the target terminal through a sidelink between the PRU and the target terminal; or

the PRU transmits the first measurement reporting information to the target terminal through an LMF or a network device.

An embodiment of the present application further provides a method for multi-frequency positioning, including:

receiving terminal capability information of a target terminal and/or a positioning reference unit (PRU), where the terminal capability information is used to indicate a multi-frequency processing capability of the target terminal and/or the PRU;

determining frequency configuration information for the target terminal and/or the PRU based on the terminal capability information, where the frequency configuration information is used for multi-frequency positioning; and

transmitting the frequency configuration information to the target terminal and/or the PRU.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, determining the frequency configuration information for the target terminal and/or the PRU based on the terminal capability information includes:

transmitting a negotiation message to a first network device based on the terminal capability information, where the negotiation message is used to indicate the first network device to determine the frequency configuration information for the target terminal or the PRU; and

receiving the frequency configuration information for the target terminal or the PRU transmitted from the first network device.

In some embodiments, after determining the frequency configuration information for the target terminal and/or the PRU, the method further includes:
transmitting the frequency configuration information for the target terminal and/or the PRU to a second network device.
In some embodiments, after transmitting the frequency configuration information to the target terminal and/or the PRU, the method further includes:

receiving first measurement reporting information transmitted from the target terminal and/or the PRU, where the first measurement reporting information includes first measurement quantity information, measurement quality information and first assistance information; and/or,

receiving second assistance information transmitted from a first network device and a second network device.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, the second assistance information includes one or more of the following:

a cell identifier or a network device identifier of a network device;

a transmit antenna identifier of a network device;

a transmission timing error group (TEG) identifier of a network device;

an antenna reference point (ARP) and/or phase center offset (PCO) error value of a network device; or

an ARP/PCO error group (APEG) identifier of a network device.

In some embodiments, the method further includes:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) of a network device.

In some embodiments, after receiving the second assistance information transmitted from the first network device and the second network device, the method further includes:
transmitting the second assistance information to the target terminal.

In some embodiments, after transmitting the frequency configuration information to the target terminal and/or the PRU, the method further includes:

receiving second measurement reporting information transmitted from a network device, where the second measurement reporting information includes second measurement quantity information, measurement quality information and third assistance information; and

receiving fourth assistance information transmitted from the target terminal and/or the PRU.

In some embodiments, the second measurement quantity information includes one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the third assistance information includes one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device;

an ARP/PCO error group (APEG) identifier of the network device.

In some embodiments, the fourth assistance information includes one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

In some embodiments, the method further includes:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) of the network device.
An embodiment of the present application further provides a method for multi-frequency positioning, including:

determining frequency configuration information for a target terminal and/or a positioning reference unit (PRU), where the frequency configuration information is used for multi-frequency positioning; and

transmitting the frequency configuration information to the target terminal and/or the PRU.

In some embodiments, determining the frequency configuration information for the target terminal and/or the PRU includes:

receiving a negotiation message transmitted from a location management function (LMF), where the negotiation message is used to indicate a first network device to determine the frequency configuration information for the target terminal or the PRU; and

determining the frequency configuration information for the target terminal or the PRU based on the negotiation message.

In some embodiments, after determining the frequency configuration information for the target terminal and/or the PRU, the method further includes:
transmitting the frequency configuration information for the target terminal and/or the PRU to a location management function (LMF) and a second network device.
In some embodiments, after transmitting the frequency configuration information to the target terminal and/or the PRU, the method further includes:
transmitting second measurement reporting information to a location management function (LMF), where the second measurement reporting information includes second measurement quantity information, measurement quality information and third assistance information.
An embodiment of the present application further provides a terminal, including a memory, a transceiver and a processor,

where the memory is used for storing a computer program, the transceiver is used for receiving and transmitting data under control of the processor, and the processor is used for reading the computer program in the memory and performing the following operations:

a target terminal and/or a positioning reference unit (PRU) transmits terminal capability information to a first positioning node, where the terminal capability information is used to indicate a multi-frequency processing capability of the target terminal and/or the PRU; and

receiving frequency configuration information transmitted from the first positioning node, and performing multi-frequency positioning based on multiple frequencies indicated by the frequency configuration information.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, performing the multi-frequency positioning based on the multiple frequencies indicated by the frequency configuration information includes:

measuring downlink positioning reference signals based on the multiple frequencies indicated by the frequency configuration information; or

transmitting uplink positioning reference signals based on the multiple frequencies indicated by the frequency configuration information.

In some embodiments, after measuring the downlink positioning reference signals, the operations further include:
transmitting first measurement reporting information, where the first measurement reporting information includes first measurement quantity information, measurement quality information and first assistance information.
In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, transmitting the first measurement reporting information includes:

the target terminal and the PRU transmit the first measurement reporting information to a location management function (LMF); or

the PRU transmits the first measurement reporting information to the target terminal.

In some embodiments, the PRU transmits the first measurement reporting information to the target terminal includes:

the PRU transmits the first measurement reporting information to the target terminal through a sidelink between the PRU and the target terminal; or

the PRU transmits the first measurement reporting information to the target terminal through an LMF or a network device.

An embodiment of the present application further provides a location management function (LMF), including a memory, a transceiver and a processor,
where the memory is used for storing a computer program, the transceiver is used for receiving and transmitting data under control of the processor, and the processor is used for reading the computer program in the memory and performing the following operations:

receiving terminal capability information of a target terminal and/or a positioning reference unit (PRU), where the terminal capability information is used to indicate a multi-frequency processing capability of the target terminal and/or the PRU;

determining frequency configuration information for the target terminal and/or the PRU based on the terminal capability information, where the frequency configuration information is used for multi-frequency positioning; and

transmitting the frequency configuration information to the target terminal and/or the PRU.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, determining the frequency configuration information for the target terminal and/or the PRU based on the terminal capability information includes:

transmitting a negotiation message to a first network device based on the terminal capability information, where the negotiation message is used to indicate the first network device to determine the frequency configuration information for the target terminal or the PRU; and

receiving the frequency configuration information for the target terminal or the PRU transmitted from the first network device.

In some embodiments, after determining the frequency configuration information for the target terminal and/or the PRU, the operations further include:
transmitting the frequency configuration information for the target terminal and/or the PRU to a second network device.
In some embodiments, after transmitting the frequency configuration information to the target terminal and/or the PRU, the operations further include:

receiving first measurement reporting information transmitted from the target terminal and/or the PRU, where the first measurement reporting information includes first measurement quantity information, measurement quality information and first assistance information; and/or,

receiving second assistance information transmitted from a first network device and a second network device.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, the second assistance information includes one or more of the following:

a cell identifier or a network device identifier of a network device;

a transmit antenna identifier of a network device;

a transmission timing error group (TEG) identifier of a network device;

an antenna reference point (ARP) and/or phase center offset (PCO) error value of a network device; or

an ARP/PCO error group (APEG) identifier of a network device.

In some embodiments, the operations further include:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) of a network device.
In some embodiments, after receiving the second assistance information transmitted from the first network device and the second network device, the operations further include:
transmitting the second assistance information to the target terminal.
In some embodiments, after transmitting the frequency configuration information to the target terminal and/or the PRU, the operations further include:

receiving second measurement reporting information transmitted from a network device, where the second measurement reporting information includes second measurement quantity information, measurement quality information and third assistance information; and

receiving fourth assistance information transmitted from the target terminal and/or the PRU.

In some embodiments, the second measurement quantity information includes one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the third assistance information includes one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device;

an ARP/PCO error group (APEG) identifier of the network device.

In some embodiments, the fourth assistance information includes one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

In some embodiments, the operations further include:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) of the network device.
An embodiment of the present application further provides a first network device, including a memory, a transceiver and a processor,
where the memory is used for storing a computer program, the transceiver is used for receiving and transmitting data under control of the processor, and the processor is used for reading the computer program in the memory and performing the following operations:

determining frequency configuration information for a target terminal and/or a positioning reference unit (PRU), where the frequency configuration information is used for multi-frequency positioning; and

transmitting the frequency configuration information to the target terminal and/or the PRU.

In some embodiments, determining the frequency configuration information for the target terminal and/or the PRU includes:

receiving a negotiation message transmitted from a location management function (LMF), where the negotiation message is used to indicate a first network device to determine the frequency configuration information for the target terminal or the PRU; and

determining the frequency configuration information for the target terminal or the PRU based on the negotiation message.

In some embodiments, after determining the frequency configuration information for the target terminal and/or the PRU, the operations further include:
transmitting the frequency configuration information for the target terminal and/or the PRU to a location management function (LMF) and a second network device.
In some embodiments, after transmitting the frequency configuration information to the target terminal and/or the PRU, the operations further include:
transmitting second measurement reporting information to a location management function (LMF), where the second measurement reporting information includes second measurement quantity information, measurement quality information and third assistance information.
An embodiment of the present application further provides an apparatus for multi-frequency positioning, including:

a first transmitting unit, used for a target terminal and/or a positioning reference unit (PRU) to transmit terminal capability information to a first positioning node, where the terminal capability information is used to indicate a multi-frequency processing capability of the target terminal and/or the PRU; and

a first receiving unit, used for receiving frequency configuration information transmitted from the first positioning node, and performing multi-frequency positioning based on multiple frequencies indicated by the frequency configuration information.

An embodiment of the present application further provides an apparatus for multi-frequency positioning, including:

a second receiving unit, used for receiving terminal capability information of a target terminal and/or a positioning reference unit (PRU), where the terminal capability information is used to indicate a multi-frequency processing capability of the target terminal and/or the PRU;

a first determining unit, used for determining frequency configuration information for the target terminal and/or the PRU based on the terminal capability information, where the frequency configuration information is used for multi-frequency positioning; and

a second transmitting unit, used for transmitting the frequency configuration information to the target terminal and/or the PRU.

An embodiment of the present application further provides an apparatus for multi-frequency positioning, including:

a second determining unit, used for determining frequency configuration information for a target terminal and/or a positioning reference unit (PRU), where the frequency configuration information is used for multi-frequency positioning; and

a third transmitting unit, used for transmitting the frequency configuration information to the target terminal and/or the PRU.

An embodiment of the present application further provides a computer-readable storage medium storing a computer program that causes a computer to perform any of the methods for multi-frequency positioning described above.

An embodiment of the present application further provides a communication device storing a computer program that causes the communication device to perform any of the methods for multi-frequency positioning described above.

An embodiment of the present application further provides a processor-readable storage medium storing a computer program that causes a processor to perform any of the methods for multi-frequency positioning described above.

An embodiment of the present application further provides a chip product storing a computer program that causes the chip product to perform any of the methods for multi-frequency positioning described above.

In the methods and apparatuses for multi-frequency positioning, devices and the storage medium, the target terminal and/or the PRU may transmit their respective terminal capability information to the first positioning node to indicate their respective multi-frequency processing capabilities, the first positioning node may determine the frequency configuration information for the target terminal and/or the PRU based on the terminal capability information, and transmit the frequency configuration information to the target terminal and/or the PRU, and the target terminal and/or the PRU may perform multi-frequency positioning, thereby supporting new radio (NR) multi-frequency carrier phase positioning, and effectively improving an integer ambiguity solving accuracy of carrier phase positioning and a terminal positioning accuracy.

BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for multi-frequency positioning according to an embodiment of the present application;

FIG. 2 is a second schematic flowchart of a method for multi-frequency positioning according to an embodiment of the present application;

FIG. 3 is a third schematic flowchart of a method for multi-frequency positioning according to an embodiment of the present application;

FIG. 4 is a schematic structural diagram of a terminal according to an embodiment of the present application;

FIG. 5 is a schematic structural diagram of a location management function (LMF) according to an embodiment of the present application;

FIG. 6 is a schematic structural diagram of a first network device according to an embodiment of the present application;

FIG. 7 is a first schematic structural diagram of an apparatus for multi-frequency positioning according to an embodiment of the present application;

FIG. 8 is a second schematic structural diagram of an apparatus for multi-frequency positioning according to an embodiment of the present application; and

FIG. 9 is a third schematic structural diagram of an apparatus for multi-frequency positioning according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the embodiments of the present application, some contents related to the embodiments of the present application are first introduced.

The 3rd generation partnership project (3GPP) Rel-18 discusses a solution for single-shot based 5th generation (5G) new radio (NR) carrier phase positioning (CPP). The following two main problems need to be solved to implement the single-shot carrier phase positioning: (1) how to obtain accurate integer ambiguity; and (2) how to eliminate or reduce an influence of base station/terminal antenna reference point (ARP) error and/or base station/terminal antenna phase center offset (PCO) error on integer ambiguity solving and target terminal location solving.

In carrier phase positioning of global navigation satellite system (GNSS), a commonly used technology is to use a multi-frequency carrier phase measurement quantity obtained in single measurement time, solve a integer ambiguity of each frequency through linear combination and a step-by-step ambiguity determination method, and further solve a location of a target terminal, which may effectively improve an integer ambiguity solving accuracy for carrier phase positioning and a terminal positioning accuracy.

The 3GPP protocol already supports GNSS CPP. A location management function (LMF) may use a 3-bit parameter to notify a terminal to obtain a carrier phase measurement quantity of 0 to 8 GNSS frequencies, where a quantity of valid frequencies of global positioning system (GPS) is 3 and a quantity of valid frequencies of BeiDou navigation satellite system (BDS) is 4. Since GPS and BDS use code division multiple access (CDMA) signals, a carrier frequency of each CDMA signal is fixed and known, while NR uses orthogonal frequency division multiplexing (OFDM) multi-carrier signals, and a receiver may output a carrier phase measurement quantity of any frequency within a carrier bandwidth, the traditional GNSS carrier phase positioning technology cannot support NR multi-frequency carrier phase positioning.

In order to support NR multi-frequency carrier phase positioning, the embodiments of the present application provide a multi-frequency positioning solution, which may obtain accurate integer ambiguity and eliminate an influence of ARP error and/or PCO error of the base station/terminal, thereby improving an integer ambiguity solving accuracy of carrier phase positioning and a terminal positioning accuracy.

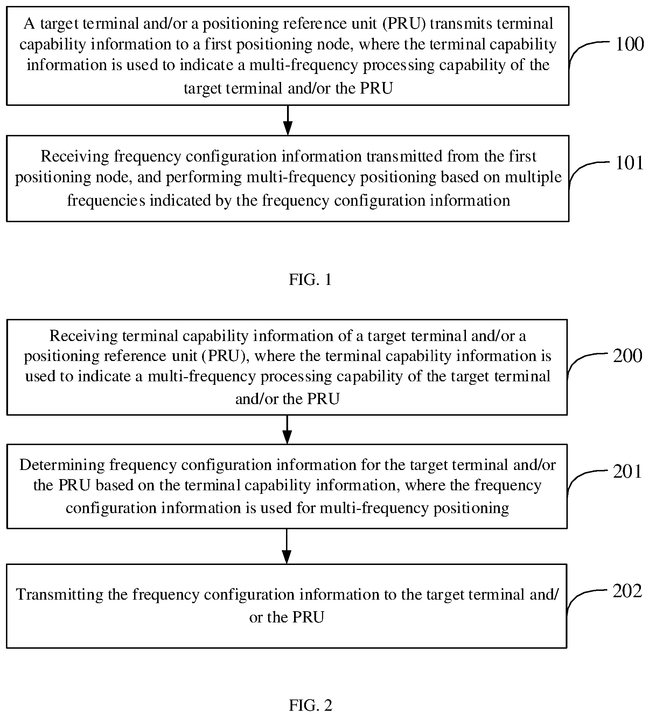

FIG. 1 is a first schematic flowchart of a method for multi-frequency positioning according to an embodiment of the present application. As shown in FIG. 1, the method includes the following steps.

Step 100: a target terminal and/or a positioning reference unit (PRU) transmits terminal capability information to a first positioning node, where the terminal capability information is used to indicate a multi-frequency processing capability of the target terminal and/or the PRU.

An embodiment of the present application provides a multi-frequency positioning method to accurately position the target terminal. First, the target terminal and/or the positioning reference unit (PRU) may transmit their respective terminal capability information to the first positioning node to indicate their respective multi-frequency processing capabilities, that is, to indicate the frequencies supported by the target terminal and/or the PRU.

In some embodiments, the PRU may be a reference terminal or an anchor terminal.

In some embodiments, the multi-frequency processing capability of the target terminal and/or the PRU may include one or more of the following.

(1) A frequency range, a frequency band or a carrier supported by the target terminal and/or the PRU.

For example, the terminal capability information may indicate a specific frequency range, frequency band or carrier supported by the target terminal and/or the PRU for multi-frequency processing.

(2) All frequencies in a first frequency range, a first frequency band or a first carrier supported by the target terminal and/or the PRU.

In an embodiment, the first frequency range may refer to any or a certain frequency range, the first frequency band may refer to any or a certain frequency band, and the first carrier may refer to any or a certain carrier, which are not limited here.

For example, the terminal capability information may indicate a certain frequency range, a certain frequency band or a certain carrier, indicating that the target terminal and/or the PRU supports downlink positioning reference signal measurement or uplink positioning reference signal transmission at any frequency in the frequency range, the frequency band or the carrier.

For example, the terminal capability information may indicate a certain frequency range, a certain frequency band or a certain carrier, and further indicates that the target terminal and/or the PRU supports downlink positioning reference signal measurement or uplink positioning reference signal transmission at any frequency in the frequency range, the frequency band or the carrier.

(3) A center frequency in a first frequency range, a first frequency band or a first carrier supported by the target terminal and/or the PRU.

For example, the terminal capability information may indicate a certain frequency range, a certain frequency band or a certain carrier, indicating that the target terminal and/or the PRU supports downlink positioning reference signal measurement or uplink positioning reference signal transmission at the center frequency in the frequency range, the frequency band or the carrier.

For example, the terminal capability information may indicate a certain frequency range, a certain frequency band or a certain carrier, and further indicate that the target terminal and/or the PRU only supports downlink positioning reference signal measurement or uplink positioning reference signal transmission at the center frequency in the frequency range, the frequency band or the carrier.

(4) A frequency set supported by the target terminal and/or the PRU.

For example, the terminal capability information may indicate a frequency set supported by the target terminal and/or the PRU, such as a frequency set $SET\_A=\{FP_1, FP_2,...,FP_M\}$ supported by the target terminal and/or the PRU, where $FP_1 <FP_2<... < FP_M$, and they are positive integers greater than or equal to 1, and $FP_m$ represents a value or identification (ID) of a corresponding frequency ($m=1, 2,...,M$).

Step 101: receiving frequency configuration information transmitted from the first positioning node, and performing multi-frequency positioning based on multiple frequencies indicated by the frequency configuration information.

In an embodiment, after receiving the terminal capability information of the target terminal and/or the PRU, the first positioning node may determine the frequency configuration information for the target terminal and/or the PRU based on the terminal capability information, where the frequency configuration information indicates multiple frequencies, and the target terminal and/or the PRU may perform multi-frequency positioning based on the frequencies indicated by the frequency configuration information.

In some embodiments, the frequency configuration information may include a frequency set, for example, the frequency configuration information includes a frequency set $SET\_B =\{FP_1, FP_2,...,FP_{M1}\}$, where $FP_m$ ($m=1,2,...,M1$) represents a value or ID of a corresponding frequency, and M1 is a quantity of frequencies. A frequency set $SET\_B$ of the target terminal is a subset of a frequency set $SET\_B$ of the PRU. In case that there is only one target terminal, the frequency set $SET\_B$ notified to the target terminal by the first positioning node and the frequency set $SET\_B$ of the PRU may be the same. The frequency configuration information may be frequency information corresponding to multiple frequencies in a frequency band, multiple frequencies in different frequency bands, or different subcarriers at a frequency.

In some embodiments, performing the multi-frequency positioning procedure based on the multiple frequencies indicated by the frequency configuration information includes: measuring downlink positioning reference signals based on the multiple frequencies indicated by the frequency configuration information; or transmitting uplink positioning reference signals based on the multiple frequencies indicated by the frequency configuration information.

For example, for a downlink positioning scenario, the target terminal and/or the PRU may measure downlink positioning reference signals (PRSs) at the multiple frequencies indicated by the frequency configuration information and report measurement information.

For example, for an uplink positioning scenario, the target terminal and/or the PRU may transmit uplink positioning reference signals based on the multiple frequencies indicated by the frequency configuration information. The uplink positioning reference signal may be an uplink sounding reference signal for positioning (SRS-Pos).

It should be noted that the first positioning node may be a serving network device (such as a serving base station) for the LMF and/or the terminal (target terminal and/or PRU). The first positioning node to which the terminal transmits the terminal capability information and the first positioning node that transmits the frequency configuration information to the terminal may be a same positioning node or different positioning nodes.

For example, the terminal may transmit the terminal capability information to the LMF and then receive the frequency configuration information transmitted from the LMF; or the terminal may transmit the terminal capability information to the LMF and then receive the frequency configuration information transmitted from the serving network device; or the terminal may transmit the terminal capability information to the serving network device and then receive the frequency configuration information transmitted from the LMF; or the terminal may transmit the terminal capability information to the serving network device and then receive the frequency configuration information transmitted from the serving network device. The specific circumstances are not limited.

The embodiments of the present application are described by taking multi-frequency carrier phase positioning as an example. It may be known by those skilled in the art that the solutions of the embodiments of the present application are not limited to the carrier phase positioning scenario, and other types of positioning scenarios may also be applied. For the convenience of subsequent description, the embodiments of the present application are introduced by taking carrier phase positioning as an example.

In the method for multi-frequency positioning, the target terminal and/or the PRU may transmit their respective terminal capability information to the first positioning node to indicate their respective multi-frequency processing capability, the first positioning node may determine the frequency configuration information for the target terminal and/or the PRU based on the terminal capability information, and transmit the frequency configuration information to the target terminal and/or the PRU, and the target terminal and/or the PRU may perform multi-frequency positioning, thereby supporting new radio (NR) multi-frequency carrier phase positioning, and effectively improving an integer ambiguity solving accuracy of carrier phase positioning and a terminal positioning accuracy.

In some embodiments, the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In an embodiment, the PRU may also provide terminal capability information on whether the ARP/PCO absolute error or the ARP/PCO error group (APEG) is supported.

In case that the APEG is supported, the PRU may also provide a mapping relationship between an APEG ID corresponding to the PRU and an APEG value, such as a mapping relationship table. For example, the APEG ID of the PRU = 0, and the corresponding APEG value is 0.1 cm, indicating that the ARP and/or PCO absolute error of the PRU does not exceed 0.1 cm.

The value corresponding to the APEG ID may be pre-defined by a protocol, or notified by a network side through signaling, where the signaling may include long term evolution positioning protocol (LPP) signaling, radio resource control (RRC) signaling, media access control-control element (MAC-CE) or downlink control information (DCI) signaling, etc.

In some embodiments, after measuring the downlink positioning reference signals, the method further includes: transmitting first measurement reporting information, where the first measurement reporting information includes first measurement quantity information, measurement quality information and first assistance information.

In an embodiment, after measuring the downlink positioning reference signals based on the frequency configuration information, the target terminal and/or the PRU may transmit the first measurement reporting information to a node performing positioning solving, where the first measurement reporting information includes the first measurement quantity information, the measurement quality information and the first assistance information.

In some embodiments, the target terminal and/or the PRU transmits the first measurement reporting information may include:
the target terminal and the PRU transmit the first measurement reporting information to the LMF; or, the PRU transmits the first measurement reporting information to the target terminal.

For example, for a UE assisted downlink positioning scenario, a node performing positioning solving is an LMF, and a target terminal and a PRU may transmit first measurement report information to the LMF.

For example, for a UE based downlink positioning scenario, a node performing positioning solving is a target terminal, and a PRU may transmit first measurement report information to the target terminal.

In some embodiments, the PRU transmits the first measurement reporting information to the target terminal includes:
the PRU transmits the first measurement reporting information to the target terminal through a sidelink between the PRU and the target terminal; or the PRU transmits the first measurement reporting information to the target terminal through an LMF or a network device.

For example, in case that a sidelink is established between a PRU and a target terminal, the PRU may transmit first measurement reporting information to the target terminal through the sidelink.

For example, a PRU may also transmit the first measurement reporting information to an LMF or a serving base station for the PRU, and the LMF or the serving base station for the PRU forwards the first measurement reporting information to the target terminal.

In some embodiments, the first measurement quantity information includes one or more of the following.

(1) A phase of arrival (POA) measurement quantity of a same receiving antenna of a terminal at different frequencies, that is, a non-differential for different network devices (such as base stations or transmission and reception points (TRPs)). The same receiving antenna of the terminal measures downlink positioning reference signals transmitted from different network devices.

(2) A single differential phase difference of arrival (PDOA) measurement quantity or relative signal phase difference (RSPD) measurement quantity of a same receiving antenna of a terminal at different frequencies, that is, a single differential for different network devices (such as base stations or TRPs). The same receiving antenna of the terminal measures downlink positioning reference signals transmitted from different network devices.

(3) A single differential PDOA measurement quantity or RSPD measurement quantity of a same network device at different frequencies, that is, a single differential for different receiving antennas of the same terminal. The different receiving antennas of the terminal measure the downlink positioning reference signals transmitted from the same network device.

(4) A double differential PDOA measurement quantity of different receiving antennas of a terminal and different network devices at different frequencies, that is, a double differential for different receiving antennas of a same terminal and different network devices (such as base stations or TRPs). The different receiving antennas of the terminal measure the downlink positioning reference signals transmitted from different network devices.

In some embodiments, the measurement quality information includes one or more of the following.

(1) A carrier phase measurement quality indicator. For example, it is indicated whether the carrier phase is continuous and whether there is half-cycle ambiguity information.

(2) A variance or maximum value of carrier phase measurement error.

(3) A signal to interference plus noise ratio (SINR).

(4) Reference signal receiving power (RSRP).

(5) Reference signal receiving quality (RSRQ).

In some embodiments, the first assistance information includes one or more of the following.

(1) A cell identifier or a network device identifier corresponding to each piece of first measurement quantity information and each piece of measurement quality information. For example, the first assistance information may be used to indicate to which cell or network device a certain measurement quantity reported by a certain PRU corresponds.

(2) Frequency information corresponding to each piece of first measurement quantity information and each piece of measurement quality information. For example, the first assistance information may be used to indicate to which frequency a certain measurement quantity reported by a certain PRU corresponds.

(3) A receiving antenna identifier of target terminal or PRU.

(4) A reception (Rx) timing error group (TEG) identifier of target terminal or PRU.

(5) An identifier of target terminal or PRU.

(6) Location information of PRU.

(7) An ARP and/or PCO error value of PRU.

(8) An APEG identifier of PRU.

FIG. 2 is a second schematic flowchart of a method for multi-frequency positioning according to an embodiment of the present application. As shown in FIG. 2, the method includes the following steps.
Step 200: receiving terminal capability information of a target terminal and/or a positioning reference unit (PRU), where the terminal capability information is used to indicate a multi-frequency processing capability of the target terminal and/or the PRU.
Step 201: determining frequency configuration information for the target terminal and/or the PRU based on the terminal capability information, where the frequency configuration information is used for multi-frequency positioning.
Step 202: transmitting the frequency configuration information to the target terminal and/or the PRU.

In the embodiments of the present application, the target terminal and/or the PRU may transmit their respective terminal capability information to the LMF and/or the serving network device to indicate their respective multi-frequency processing capability, that is, to indicate the frequencies supported by the target terminal and/or the PRU.

In some embodiments, the multi-frequency processing capability of the target terminal and/or the PRU includes one or more of the following.

(1) A frequency range, a frequency band or a carrier supported by the target terminal and/or the PRU.

For example, the terminal capability information may indicate a specific frequency range, frequency band or carrier that the target terminal and/or the PRU supports for multi-frequency processing.

(2) All frequencies in a first frequency range, a first frequency band or a first carrier supported by the target terminal and/or the PRU.

In an embodiment, the first frequency range may refer to any or a specified frequency range, the first frequency band may refer to any or a specified frequency band, and the first carrier may refer to any or a specified carrier, which are not limited here.

For example, the terminal capability information may indicate a certain frequency range, a certain frequency band or a certain carrier, indicating that the target terminal and/or the PRU supports downlink positioning reference signal measurement or uplink positioning reference signal transmission at any frequency in the frequency range, the frequency band or the carrier.

For example, the terminal capability information may indicate a certain frequency range, a certain frequency band or a certain carrier, and further indicates that the target terminal and/or the PRU supports downlink positioning reference signal measurement or uplink positioning reference signal transmission at any frequency in the frequency range, the frequency band or the carrier.

(3) A center frequency in a first frequency range, a first frequency band or a first carrier supported by the target terminal and/or the PRU.

For example, the terminal capability information may indicate a certain frequency range, a certain frequency band or a certain carrier, indicating that the target terminal and/or the PRU supports downlink positioning reference signal measurement or uplink positioning reference signal transmission at the center frequency in the frequency range, the frequency band or the carrier.

For example, the terminal capability information may indicate a certain frequency range, a certain frequency band or a certain carrier, and further indicate that the target terminal and/or the PRU only supports downlink positioning reference signal measurement or uplink positioning reference signal transmission at the center frequency in the frequency range, the frequency band or the carrier.

(4) A frequency set supported by the target terminal and/or the PRU.

For example, the terminal capability information may indicate a frequency set supported by the target terminal and/or the PRU, such as a frequency set $SET\_A=\{FP_1, FP_2,...,FP_M\}$ supported by the target terminal and/or the PRU, where $FP_1<FP_2<...<FP_M$ and they are positive integers greater than or equal to 1, and $FP_m$ represents a value or ID of a corresponding frequency ($m=1, 2,...,M$).

After receiving the terminal capability information (which may be directly transmitted from the terminal to the LMF, or transmitted from the terminal to the serving network device and then forwarded to the LMF by the serving network device) of the target terminal and/or the PRU, the LMF may determine the frequency configuration information of the target terminal and/or the PRU based on the terminal capability information and transmit the frequency configuration information to a corresponding terminal. The frequency configuration information indicates multiple frequencies, and the target terminal and/or the PRU may perform multi-frequency positioning based on the frequencies indicated by the frequency configuration information.

In some embodiments, the frequency configuration information may include a frequency set, for example, the frequency configuration information includes a frequency set $SET\_B =\{FP_1, FP_2,...,FP_{M1}\}$, where $FP_m$ ($m=1,2,...,M1$) represents a value or ID of a corresponding frequency, and M1 is a quantity of frequencies. A frequency set $SET\_B$ of the target terminal is a subset of a frequency set $SET\_B$ of the PRU. In case that there is only one target terminal, the frequency set $SET\_B$ notified to the target terminal by the first positioning node and the frequency set $SET\_B$ of the PRU may be the same. The frequency configuration information may be frequency information corresponding to multiple frequencies in a frequency band, multiple frequencies in different frequency bands, or different subcarriers at a frequency.

In the method for multi-frequency positioning provided by the embodiments of the present application, the LMF may receive the terminal capability information of the target terminal and/or the PRU, and after determining the frequency configuration information of the target terminal and/or the PRU based on the terminal capability information, transmit the frequency configuration information to the target terminal and/or the PRU, so that the target terminal and/or the PRU may perform multi-frequency positioning, thereby supporting NR multi-frequency carrier phase positioning, and effectively improving the integer ambiguity solving accuracy of carrier phase positioning and the terminal positioning accuracy.

In some embodiments, the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In an embodiment, the PRU may also provide terminal capability information on whether the ARP/PCO absolute error or the APEG is supported.

In case that the APEG is supported, the PRU may also provide a mapping relationship between an APEG ID corresponding to the PRU and an APEG value, such as a mapping relationship table. For example, the APEG ID of the PRU = 0, and the corresponding APEG value is 0.1 cm, indicating that the ARP and/or PCO absolute error of the PRU does not exceed 0.1 cm.

The value corresponding to the APEG ID may be pre-defined by a protocol, or notified by a network side through signaling, where the signaling may include LPP signaling, RRC signaling, MAC-CE or DCI signaling, etc.

In some embodiments, determining the frequency configuration information for the target terminal and/or the PRU based on the terminal capability information includes:

transmitting a negotiation message to a first network device based on the terminal capability information, where the negotiation message is used to indicate the first network device to determine the frequency configuration information for the target terminal or the PRU; and

receiving the frequency configuration information for the target terminal or the PRU transmitted from the first network device.

In an embodiment, after receiving the terminal capability information of the target terminal and/or the PRU, the LMF may negotiate with the corresponding first network device (referring to the serving network device for the target terminal or the PRU) based on the terminal capability information to determine the frequency configuration information for the target terminal or the PRU.

In an embodiment, the negotiation message transmitted from the LMF to the first network device may carry one or more of an identifier of the target terminal or the PRU, candidate frequency information determined by the LMF, or indication information indicating the first network device to determine the frequency configuration information for the target terminal or the PRU.

In some embodiments, after determining the frequency configuration information for the target terminal and/or the PRU, the method further includes:
transmitting the frequency configuration information for the target terminal and/or the PRU to a second network device.

In an embodiment, the second network device refers to a network device other than the serving network device that assists the target terminal in positioning, for example, it may be a neighboring base station of the serving base station of each terminal.

For example, for the frequency configuration information for a certain PRU, after receiving the frequency configuration information for the PRU from the serving base station of the PRU, the LMF may further transmit the frequency configuration information for the PRU to the neighboring base station of the serving base station of the PRU.

In some embodiments, after transmitting the frequency configuration information to the target terminal and/or the PRU, the method further includes:

receiving first measurement reporting information transmitted from the target terminal and/or the PRU, where the first measurement reporting information includes first measurement quantity information, measurement quality information and first assistance information; and/or,

receiving second assistance information transmitted from a first network device and a second network device.

In an embodiment, for the downlink positioning scenario, the target terminal and/or the PRU may measure downlink positioning reference signals on the multiple frequencies indicated by the frequency configuration information and report measurement information.

In an embodiment, for a UE assisted downlink positioning scenario, a node performing positioning solving is an LMF, a target terminal and a PRU may transmit first measurement reporting information to the LMF, a first network device and a second network device may transmit their respective second assistance information to the LMF, and first measurement reporting information and the second assistance information are used by the LMF to perform the location solving for the target terminal.

In some embodiments, after receiving the second assistance information transmitted from the first network device and the second network device, the method further includes:

transmitting the second assistance information to the target terminal.

In an embodiment, for a UE based downlink positioning scenario, a node performing positioning solving is a target terminal, and a PRU may transmit first measurement reporting information to the target terminal. In addition, a first network device and a second network device may transmit respective second assistance information to the LMF, the LMF then transmits the received second assistance information to the target terminal, and the target terminal performs location solving.

In some embodiments, the first measurement quantity information includes one or more of the following.

(1) A POA measurement quantity of a same receiving antenna of a terminal at different frequencies, that is, a non-differential for different network devices (such as base stations or TRPs). The same receiving antenna of the terminal measures downlink positioning reference signals transmitted from different network devices.

(2) A single differential PDOA measurement quantity or RSPD measurement quantity of a same receiving antenna of a terminal at different frequencies, that is, a single differential for different network devices (such as base stations or TRPs). The same receiving antenna of the terminal measures downlink positioning reference signals transmitted from different network devices.

(3) A single differential PDOA measurement quantity or RSPD measurement quantity of a same network device at different frequencies, that is, a single differential for different receiving antennas of the same terminal. The different receiving antennas of the terminal measure the downlink positioning reference signals transmitted from the same network device.

(4) A double differential PDOA measurement quantity of different receiving antennas of a terminal and different network devices at different frequencies, that is, a double differential for different receiving antennas of a same terminal and different network devices (such as base stations or TRPs). The different receiving antennas of the terminal measure the downlink positioning reference signals transmitted from different network devices.

In some embodiments, the measurement quality information includes one or more of the following.

(1) A carrier phase measurement quality indicator. For example, it is indicated whether the carrier phase is continuous and whether there is half-cycle ambiguity information.

(2) A variance or maximum value of carrier phase measurement error.

(3) A signal to interference plus noise ratio (SINR).

(4) Reference signal receiving power (RSRP).

(5) Reference signal receiving quality (RSRQ).

In some embodiments, the first assistance information includes one or more of the following.

(1) A cell identifier or a network device identifier corresponding to each piece of first measurement quantity information and each piece of measurement quality information. For example, the first assistance information may be used to indicate which cell or network device a certain measurement quantity reported by a certain PRU corresponds to.

(2) Frequency information corresponding to each piece of first measurement quantity information and each piece of measurement quality information. For example, the first assistance information may be used to indicate which frequency a certain measurement quantity reported by a certain PRU corresponds to.

(3) A receiving antenna identifier of target terminal or PRU.

(4) A reception (Rx) TEG identifier of target terminal or PRU.

(5) An identifier of target terminal or PRU.

(6) Location information of PRU.

(7) An ARP and/or PCO error value of PRU.

(8) An APEG identifier of PRU.

In some embodiments, the second assistance information includes one or more of the following.

(1) A cell identifier or a network device identifier of a network device.

(2) A transmit antenna identifier of a network device.

(3) A transmission (Tx) TEG identifier of a network device.

(4) An ARP and/or PCO error value of a network device.

(5) An APEG identifier of a network device.

In some embodiments, the method further includes:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) of a network device.

In an embodiment, for the UE assisted downlink positioning scenario, an LMF may solve a location of a target terminal based on received first measurement reporting information, second assistance information, pre-obtained location information of a network device, an ARP and/or PCO error of a network device, or an APEG identifier, etc. In case that the target terminal, a PRU or the network device reports the APEG identifier, the LMF may obtain an ARP and/or PCO error range value corresponding to the APEG identifier based on a mapping relationship between the APEG identifier and the APEG value.

For example, the LMF may select a positioning measurement quantity corresponding to a PRU whose APEG value is less than a set value (such as 0.1 cm or 1 cm, which is only an example, and the smaller the value, the better) and a positioning measurement quantity corresponding to a TRP whose APEG value is less than a set value (such as 0.1 cm or 1 cm, which is only an example, and the smaller the value, the better) to perform location solving. The positioning solving may refer to the solving way of embodiment 1 below, which is not described in detail here.

It should be noted that, for the UE based downlink positioning scenario, the steps of the target terminal performing positioning solving are similar to that of the LMF in the UE assisted downlink positioning scenario. The target terminal may solve a location of the target terminal based on information such as the first measurement report information transmitted from the PRU, the second assistance information of the network device forwarded by the LMF, the pre-obtained location information of the network device, the ARP and/or PCO error of the network device or the APEG identifier, etc.

In some embodiments, after transmitting the frequency configuration information to the target terminal and/or the PRU, the method further includes:

receiving second measurement reporting information transmitted from a network device, where the second measurement reporting information includes second measurement quantity information, measurement quality information and third assistance information; and

receiving fourth assistance information transmitted from the target terminal and/or the PRU.

In an embodiment, for the uplink positioning scenario, a target terminal and/or a PRU may transmit uplink positioning reference signals based on multiple frequencies indicated by frequency configuration information. A network device (such as a base station or a TRP) may measure the uplink positioning reference signals at these frequencies and report measurement information.

In an embodiment, for the UE assisted uplink positioning scenario, a node performing positioning solving is an LMF, a network device may transmit second measurement reporting information to the LMF, a target terminal and/or a PRU may transmit their respective fourth assistance information to the LMF, and the second measurement reporting information and the fourth assistance information are used by the LMF to perform the location solving of the target terminal.

In some embodiments, the second measurement quantity information includes one or more of the following.

(1) A POA measurement quantity of a same network device receiving antenna at multiple frequencies, that is, a non-differential for the target terminal and the PRU. The same network device receiving antenna measures the uplink positioning reference signals transmitted from different terminals (target terminal and/or PRU).

(2) A single differential PDOA measurement quantity or RSPD measurement quantity of a same network device receiving antenna at multiple frequencies, that is, a single differential for the target terminal and the PRU. The same network device receiving antenna measures the uplink positioning reference signals transmitted from different terminals (target terminal and/or PRU).

(3) A single differential PDOA measurement quantity or RSPD measurement quantity of a same terminal at multiple frequencies, that is, a single differential for different receiving antennas of a same network device. The different receiving antennas of the network device measure the uplink positioning reference signals transmitted from the same terminal (target terminal or PRU).

(4) A double differential PDOA measurement quantity of different network device receiving antennas and different terminals at multiple frequencies, that is, a double differential for different receiving antennas of the same network device and different terminals (target terminal and/or PRU). The different receiving antennas of the network device measure uplink positioning reference signals transmitted from different terminals.

In some embodiments, the measurement quality information includes one or more of the following.

(1) A carrier phase measurement quality indicator. For example, it is indicated whether the carrier phase is continuous and whether there is half-cycle ambiguity information.

(2) A variance or maximum value of carrier phase measurement error.

(3) A signal to interference plus noise ratio (SINR).

(4) Reference signal receiving power (RSRP).

(5) Reference signal receiving quality (RSRQ).

In some embodiments, the third assistance information includes one or more of the following.

(1) A cell identifier or a network device identifier of the network device.

(2) A receiving antenna identifier of the network device.

(3) A receiving TEG identifier of the network device.

(4) An ARP and/or PCO error value of the network device.

(5) An APEG identifier of the network device.

In some embodiments, the fourth assistance information includes one or more of the following:

(1) A transmit antenna identifier of the target terminal or the PRU.

(2) A transmitting TEG identifier of the target terminal or the PRU.

(3) An identifier of the target terminal or the PRU.

(4) Location information of the PRU.

(5) An ARP and/or PCO error value of the PRU.

(6) An APEG identifier of the PRU.

In some embodiments, the method further includes:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) of the network device.

In an embodiment, for the UE assisted uplink positioning scenario, an LMF may solve a location of a target terminal based on received second measurement reporting information, fourth assistance information, pre-obtained location information of a network device, an ARP and/or PCO error of a network device, or an APEG identifier. In case that the target terminal, PRU or network device reports the APEG identifier, the LMF may obtain an ARP and/or PCO error range value corresponding to the APEG identifier based on a mapping relationship between the APEG identifier and the APEG value.

For example, the LMF may select a positioning measurement quantity corresponding to a PRU whose APEG value is less than a set value (such as 0.1 cm or 0.5 cm, which is only an example, and the smaller the value, the better) and a positioning measurement quantity corresponding to a TRP whose APEG value is less than a set value (such as 0.1 cm or 0.5 cm, which is only an example, and the smaller the value, the better) to perform location solving. The positioning solving may refer to the solving way of embodiment 3 below, which is not described in detail here.

The target terminal, PRU or network device reports information such as their respective ARP and/or PCO error or APEG identifier, etc., the LMF or the target terminal performing positioning solving may obtain more accurate integer ambiguity, and the impact of the ARP error and/or PCO error of the terminal or network device on the positioning accuracy is reduced, thereby improving the integer ambiguity solving accuracy of carrier phase positioning and the terminal location accuracy, and the positioning accuracy may reach centimeter level.

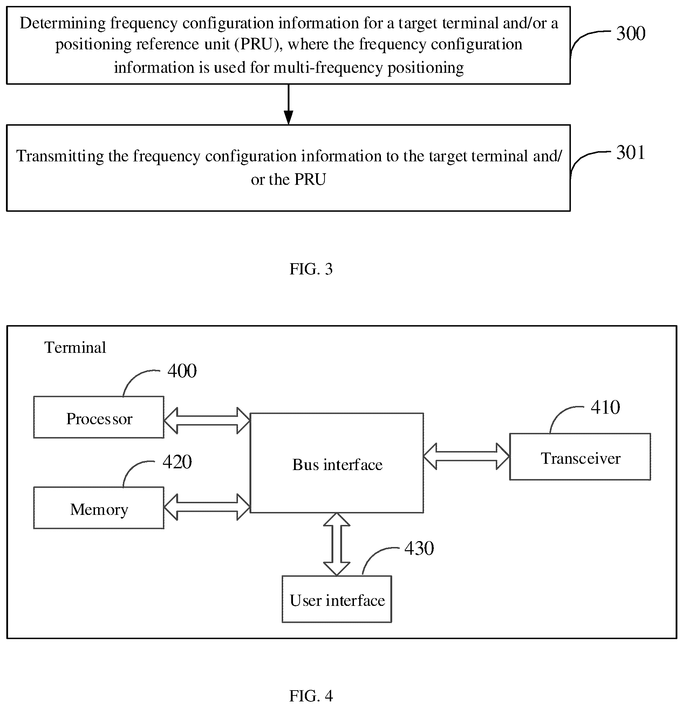

FIG. 3 is a third schematic flowchart of a method for multi-frequency positioning according to an embodiment of the present application. As shown in FIG. 3, the method includes the following steps.

Step 300: determining frequency configuration information for a target terminal and/or a positioning reference unit (PRU), where the frequency configuration information is used for multi-frequency positioning.

Step 301: transmitting the frequency configuration information to the target terminal and/or the PRU.

In the embodiments of the present application, the target terminal and/or the PRU may transmit their respective terminal capability information to the LMF and/or the serving network device to indicate their respective multi-frequency processing capability, that is, to indicate the frequencies supported by the target terminal and/or the PRU.

The first network device (i.e., the target terminal or the serving network device of the PRU) may determine the frequency configuration information for the terminal based on the terminal capability information of the corresponding terminal, and transmit the frequency configuration information for the terminal to the terminal.

In some embodiments, determining the frequency configuration information for the target terminal and/or the PRU includes:

receiving a negotiation message transmitted from a location management function (LMF), where the negotiation message is used to indicate a first network device to determine the frequency configuration information for the target terminal or the PRU; and

determining the frequency configuration information for the target terminal or the PRU based on the negotiation message.

In an embodiment, after receiving terminal capability information of a target terminal and/or a PRU, an LMF may negotiate with a corresponding first network device based on the terminal capability information to determine the frequency configuration information for the target terminal or the PRU.

In an embodiment, the negotiation message transmitted from the LMF to the first network device may carry one or more of an identifier of the target terminal or the PRU, candidate frequency information determined by the LMF, or indication information indicating the first network device to determine the frequency configuration information for the target terminal or the PRU.

In the method for multi-frequency positioning provided by the embodiments of the present application, the first network device may determine the frequency configuration information for the target terminal and/or the PRU and transmit the frequency configuration information to the target terminal and/or the PRU, and the target terminal and/or the PRU may perform multi-frequency positioning, thereby supporting NR multi-frequency carrier phase positioning, which may effectively improve the integer ambiguity solving accuracy of carrier phase positioning and the terminal positioning accuracy.

In some embodiments, after determining the frequency configuration information for the target terminal and/or the PRU, the method further includes:
transmitting the frequency configuration information for the target terminal and/or the PRU to a location management function (LMF) and a second network device.

In an embodiment, the second network device refers to a network device other than the serving network device that assists the target terminal in positioning, for example, it may be a neighboring base station of the serving base station of each terminal.

For example, for frequency configuration information of a certain PRU, after the first network device (the serving network device of the PRU) determines the frequency configuration information for the PRU, the first network device may further transmit the frequency configuration information for the PRU to the LMF and the neighboring base station of the serving base station of the PRU.

In some embodiments, after transmitting the frequency configuration information to the target terminal and/or the PRU, the method further includes:

transmitting second measurement reporting information to a location management function (LMF), where the second measurement reporting information includes second measurement quantity information, measurement quality information and third assistance information.

In an embodiment, for the uplink positioning scenario, a target terminal and/or a PRU may transmit uplink positioning reference signals based on multiple frequencies indicated by frequency configuration information. A network device (such as a base station or a TRP) may measure the uplink positioning reference signals at these frequencies and report measurement information.

In an embodiment, for the UE assisted uplink positioning scenario, a node performing positioning solving is an LMF, a network device may transmit second measurement reporting information to the LMF, a target terminal and/or a PRU may transmit their respective fourth assistance information to the LMF, and the second measurement reporting information and the fourth assistance information are used by the LMF to perform the location solving of the target terminal.

In some embodiments, the second measurement quantity information includes one or more of the following.

(1) A POA measurement quantity of a same network device receiving antenna at multiple frequencies, that is, a non-differential for the target terminal and the PRU. The same network device receiving antenna measures the uplink positioning reference signals transmitted from different terminals (target terminal and/or PRU).

(2) A single differential PDOA measurement quantity or RSPD measurement quantity of a same network device receiving antenna at multiple frequencies, that is, a single differential for the target terminal and the PRU. The same network device receiving antenna measures the uplink positioning reference signals transmitted from different terminals (target terminal and/or PRU).

(3) A single differential PDOA measurement quantity or RSPD measurement quantity of a same terminal at multiple frequencies, that is, a single differential for different receiving antennas of a same network device. The different receiving antennas of the network device measure the uplink positioning reference signals transmitted from the same terminal (target terminal or PRU).

(4) A double differential PDOA measurement quantity of different network device receiving antennas and different terminals at multiple frequencies, that is, a double differential for different receiving antennas of the same network device and different terminals (target terminal and/or PRU). The different receiving antennas of the network device measure uplink positioning reference signals transmitted from different terminals.

In some embodiments, the measurement quality information includes one or more of the following.

(1) A carrier phase measurement quality indicator. For example, it is indicated whether the carrier phase is continuous and whether there is half-cycle ambiguity information.

(2) A variance or maximum value of carrier phase measurement error.

(3) A signal to interference plus noise ratio (SINR).

(4) Reference signal receiving power (RSRP).

(5) Reference signal receiving quality (RSRQ).

In some embodiments, the third assistance information includes one or more of the following.

(1) A cell identifier or a network device identifier of the network device.

(2) A receiving antenna identifier of the network device.

(3) A receiving TEG identifier of the network device.

(4) An ARP and/or PCO error value of the network device.

(5) An APEG identifier of the network device.

The methods provided by the embodiments of the present application are based on the same concept, the implementations of the methods may refer to each other, and the repeated parts are not repeated.

The methods provided by the above embodiments of the present application are illustrated below through embodiments in specific application scenarios.

Embodiment 1: UE assisted downlink CPP.

For UE assisted downlink CPP, a target UE and a PRU respectively report first measurement quantity information, measurement quality information and first assistance information at multiple frequencies to an LMF, which are used by the LMF to perform integer ambiguity search and target UE location solving.

Target UE and PRU side procedures are as follows.

1. The target UE and PRU respectively report a UE capability of supporting multi-frequency processing of M (M is an integer greater than 1) frequencies for downlink CPP to a first positioning node (LMF and/or serving base station). The PRU may provide a UE capability of supporting ARP/PCO absolute error or APEG.

In case that APEG is supported, a mapping table of the APEG ID and APEG value of the PRU is further provided, as shown in Table 1. In case that the target UE and PRU do not support reporting of carrier phase measurement quantity at any frequency, then for the UE capability of each frequency, the target UE and the PRU may further indicate a supported frequency range *(FR1, FR2),* frequency band and carrier and whether the target UE and the PRU can support reporting of carrier phase measurement quantity at any frequency in the corresponding frequency band or carrier, or can only support reporting of carrier phase measurement quantity at the center frequency of the carrier.

Let $SET\_A=\{FP_1, FP_2,...,FP_M\}$ be a set of all frequencies supported by the 3GPP protocol for reporting carrier phase measurement quantity, where $FP_1<FP_2<...<FP_M$ and they are positive integers greater than or equal to 1, and $FP_m$ *(m=1,2,...,M)* represents a value or ID of the corresponding frequency. For example: when *M=4* or 5, $SET\_A=\{1,2,3,4\}$, or $SET\_A=\{2,4,6,8\}$, or $SET\_A=\{1,2,3,4,5\}$. For different frequency ranges *(FR1, FR2)* and frequency bands, the frequency set *SET_A* that the terminal can support may be different. For example: for *FR1* or frequency band *Band_A, SET_A= {1,2,3,4};* for *FR2* or frequency band *Band_B, SET_A={5,6,7,8}.*

For the downlink CPP, the first positioning node is preferably LMF, or it may be a serving base station, and it is forwarded to the LMF by the serving base station. There are two types of PRU: the first type is a reference UE (or anchor UE), and the second type is a reference TRP. In this embodiment, PRU refers to the first type.

Table 1 Mapping table of APEG ID and APEG value

| APEG ID | APEG value (unit: cm) |
|---------|------------------------|
| 0 | 0.1 |
| 1 | 1 |
| 2 | 5 |
| 3 | 10 |

In the table, the maximum quantity of APEG ID is 4, and the value of APEG may be pre-defined by a protocol or notified by signaling, where the signaling may include LPP, RRC, MAC-CE or DCI, etc.

2. The target UE and the PRU respectively receives the frequency configuration information transmitted from the LMF, and measures downlink PRSs of multiple frequencies from different base stations/TRPs based on the configuration information to obtain the CPP measurement quantity and measurement quality of the multiple frequencies. The frequency configuration information includes a frequency set $SET\_B=\{FP_1, FP_2,...,FP_{M1}\}$, where $FP_m$ *(m=1,2,...,M1)* represents a value or ID of the corresponding frequency, and *M1* is a quantity of frequencies.

3. The target UE and the PRU respectively reports the measurement reporting information of the multiple frequencies to the LMF, where the measurement reporting information includes three types: first measurement quantity information, measurement quality information and first assistance information.

3.1. The first measurement quantity information includes one of the following four cases or a combination of multiple cases.

CASE 1: a POA measurement quantity of a same UE receiving antenna at multiple frequencies (i.e., a non-differential for different TRPs).

CASE 2: a single differential PDOA measurement quantity or RSPD measurement quantity of a same UE receiving antenna at multiple frequencies (i.e., a single differential for different TRPs).

CASE 3: a single differential PDOA measurement quantity or RSPD measurement quantity of a same TRP at multiple frequencies (i.e., a single differential for different receiving antennas of a same UE).

CASE 4: a double differential PDOA measurement quantity of different UE receiving antennas and different TRPs (i.e., a double differential for different receiving antennas of a same UE and different TRPs).

3.2. Measurement quality information.

The measurement quality information at least includes one of the following types or a combination: a carrier phase measurement quality indicator (indication information on whether the carrier phase is continuous and whether there is half-cycle ambiguity), a variance or maximum value of carrier phase measurement error, SINR, RSRP or RSRQ, etc.

3.3. First assistance information.

The first assistance information at least includes one of the following types or any combination:

a cell ID or TRP ID corresponding to each measurement quantity and measurement quality;

frequency information corresponding to each measurement quantity and measurement quality;

a receiving antenna ID of target UE/PRU or an Rx TEG ID of target UE/PRU;

a target UE/PRU ID, and for PRU, further including location information of the PRU; or

an ARP and/or PCO error value of PRU, or APEG ID, where each APEG ID of UE corresponds to different levels of ARP and/or PCO error, as shown in Table 1.

LMF side procedures are as follows.

1. The LMF receives the UE capability of supporting multi-frequency processing of M frequencies for downlink CPP reported by the target UE and the PRU respectively, and the UE capability of the PRU of supporting ARP/PCO absolute error or APEG. In case that APEG is supported, a mapping table of the APEG ID and APEG value of the PRU is further given, as shown in Table 1. In case that the target UE and the PRU do not support reporting of carrier phase measurement quantity at any frequency, for the UE capability of each frequency, the target UE and the PRU may further indicate the supported frequency range *(FR1, FR2)*, frequency band and carrier, and whether it can support reporting of carrier phase measurement quantity at any frequency in the corresponding frequency band or carrier, or can only support reporting of carrier phase measurements at the center frequency of the carrier.

Let $SET\_A=\{FP_1, FP_2,...,FP_M\}$ be a set of all frequencies supported by the 3GPP protocol for reporting carrier phase measurement quantity, where $FP_1<FP_2<...<FP_M$ and they are positive integers greater than or equal to 1, and $FP_m$ *(m=1,2,...,M)* represents a value or ID of the corresponding frequency. For example: when *M=4* or 5, $SET\_A=\{1,2,3,4\}$, or $SET\_A=\{2,4,6,8\}$, or $SET\_A=\{1,2,3,4,5\}$. For different frequency ranges *(FR1, FR2)* and frequency bands, the frequency set *SET_A* that the terminal can support may be different. For example: for *FR1* or frequency band *Band_A*, $SET\_A=\{1,2,3,4\}$; for *FR2* or frequency band *Band_B*, $SET\_A=\{5,6,7,8\}$.

2. After negotiating with the serving base station, the LMF obtains the specific multi-frequency information which is allocated by the serving base station and needs to be reported by the target UE and the PRU, that is, the frequency configuration information. The frequency configuration information includes a frequency set $SET\_B =\{FP_1,$

$FP_2,...,FP_{M1}$, where $FP_m$ (m=1,2,...,M1) represents a value or ID of a corresponding frequency, and M1 is a quantity of frequencies.

3. The LMF notifies the target UE and the PRU of the specific multi-frequency information that each of the target UE and the PRU needs to report, and notifies a neighboring base station of the above information.

4. The LMF receives the measurement reporting information of the multiple frequencies reported by the target UE and the PRU, and the measurement reporting information includes three types: first measurement quantity information, measurement quality information and first assistance information. A location of the target UE is solved based on the above information, pre-obtained base station location information, and ARP/PCO error or APEG ID information of the base station, etc. In case that the UE or the base station/TRP reports the APEG ID, the ARP and/or PCO error range value corresponding to the APEG ID is obtained by mapping based on a predefined criterion.

Example 0: the LMF only selects a positioning measurement quantity corresponding to a PRU whose APEG value is 0.1 cm or 1 cm (for example only, the smaller the value, the better) and a positioning measurement quantity corresponding to a TRP whose APEG value is 0.1 cm or 1 cm (for example only, the smaller the value, the better) to perform location solving.

Example 1: a cost function of LMF traversal searching for target UE location $\boldsymbol{y}$ based on multiple frequencies and non-differential is as follows:

$$\boldsymbol{y}' = \arg\min_{\boldsymbol{y}\in(\boldsymbol{y}_{TDOA}\pm\Delta\boldsymbol{y}_{TDOA})} \sum_i \sum_f \beta_{i,f}\left(\widehat{\varphi}_a^{(i,f)}(\boldsymbol{y}) - \varphi_a^{(i,f)}\right)^2, (1)$$

where $\boldsymbol{y}_{TDOA}$ represents an initial UE location obtained based on an uplink/downlink time difference of arrival (UL/DL-TDOA) positioning method, $\Delta_{\boldsymbol{y}_{TDOA}}$ represents a search radius range centered on the UE initial position, and $f$ represents different frequencies. $\beta_{i,f}=\dfrac{1}{\sigma^2_{\varphi_a^{(i,f)}}+\sigma^2_{APEG(i)}}$, where $\sigma^2_{\varphi_a^{(i,f)}}$ represent a carrier phase measurement error at an i-th TRP and frequency $f$, and $\sigma^2_{APEG(i)}$ represents an ARP and/or PCO error of the TRP $i$, which is directly reported from the TRP $i$ to the LMF or obtained by mapping a reported APEG ID. $\widehat{\varphi}_a^{(i,f)}(\boldsymbol{y}) = 2\pi\left(f * \dfrac{||\boldsymbol{y}-\boldsymbol{q}_{pos_i}||}{c} - N_a^{(i,f)}\right)$ represents a carrier phase calculation quantity of the target UE and the i-th TRP, and $q_{pos_i}$ represents a location of the i-th TRP, and c represents the speed of light (3.0*10^8 (m/s)). $\varphi_a^{(i,f)}$ represents an actual carrier phase measurement quantity of the target UE and the i-th TRP; $\boldsymbol{y}$ is a location of the UE corresponding to different search points; and $N_a^{(i,f)}$ represents an integer ambiguity of the i-th TRP.

The initial UE location is firstly obtained based on positioning methods such as UL/DL-TDOA. Under an assumption that each search point within the search radius range of an initial position is given, y is determined. The carrier phase calculation quantity $\widehat{\varphi}_a^{(i,f)}(\boldsymbol{y})$ is obtained based on $\widehat{\varphi}_a^{(i,f)}(\boldsymbol{y}) = 2\pi\left(f * \dfrac{||\boldsymbol{y}-\boldsymbol{q}_{pos_i}||}{c} - N_a^{(i,f)}\right)$. A current UE location may be solved by substituting into formula (1).

Example 2: a cost function of LMF traversal searching for target UE location $\boldsymbol{y}$ based on multiple frequencies and single differential is as follows:

$$\boldsymbol{y}' = \arg\min_{\boldsymbol{y}\in(\boldsymbol{y}_{TDOA}\pm\Delta\boldsymbol{y}_{TDOA})} \sum_i \sum_j \beta_{ij,f}\left(\widehat{\varphi}_a^{(ij,f)}(\boldsymbol{y}) - \varphi_a^{(ij,f)}\right)^2,$$

where $\boldsymbol{y}_{TDOA}$ represents an initial UE location obtained based on an UL/DL-TDOA positioning method, $\Delta\boldsymbol{y}_{TDOA}$ represents a search radius range centered on the UE initial position, and $f$ represents different frequencies. $\varphi_a^{(ij,f)} = \varphi_a^{(j,f)} - \varphi_a^{(i,f)}$ , $\widehat{\varphi}_a^{(ij,f)}(\boldsymbol{y}) = \widehat{\varphi}_a^{(j,f)}(\boldsymbol{y}) - \widehat{\varphi}_a^{(i,f)}(\boldsymbol{y})$. $\beta_{ij,f}=\dfrac{1}{\sigma^2_{\varphi_a^{(ij,f)}}+\sigma^2_{APEG(i)}+\sigma^2_{APEG(j)}}$,

where $\sigma^2_{\varphi^{(ij,f)}_a}$ represents a single differential carrier phase measurement quantity error between an i-th TRP and a j-th TRP at frequency $f$, $\sigma^2_{APEG(i)}$ and $\sigma^2_{APEG(j)}$ represent ARP and/or PCO error ranges of the TRP $i$ and the TRP $j$, which are directly reported from the TRP $i$ and the TRP $j$ to the LMF, or obtained by mapping a reported APEG ID.

Example 3: a cost function of LMF traversal searching for target UE location y based on multiple frequencies and double differential (multiple PRUs) is as follows:

$$y' = \arg\min_{y \in (y_{TDOA} \pm \Delta y_{TDOA})} \sum_i \sum_j \sum_p \sum_f \beta_{ijp,f} \left( \widehat{\varphi}^{(ij,f)}_{a(p)}(y) - \varphi^{(ij,f)}_{a(p)} \right)^2,$$

where $y_{TDOA}$ represents an initial UE location obtained based on an UL/DL-TDOA positioning method, and $\Delta y_{TDOA}$ represents a search radius range centered on the UE initial position. $\varphi^{(ij,f)}_{a(p)} = \varphi^{(ij,f)}_a - \varphi^{(ij,f)}_{(p)}$ represents an actual double differential carrier phase measurement quantity (DD-POA), and $\widehat{\varphi}^{(ij,f)}_{a(p)}(y) = \widehat{\varphi}^{(ij,f)}_a(y) - \widehat{\varphi}^{(ij,f)}_{(p)}$ re-presents a double differential carrier phase calculation quantity (DD-POA), where $\widehat{\varphi}^{(ij,f)}_{(p)} = \widehat{\varphi}^{(j,f)}_{(p)} - \widehat{\varphi}^{(i,f)}_{(p)}$ repre-sents a single differential carrier phase calculation quantity of PRU $p$, $\widehat{\varphi}^{(ij,f)}_{(a)}(y) = \widehat{\varphi}^{(j,f)}_{(a)}(y) - \widehat{\varphi}^{(i,f)}_{(a)}(y)$ represents a single differential carrier phase calculation quantity of target UE $a$. $\widehat{\varphi}^{(i,f)}_a(y) = 2\pi \left( f * \frac{\|y - q_{pos_i}\|}{c} - N^{(i,f)}_a \right)$ represents a carrier phase measurement quantity of an i-th TRP; y is a location of target UE corresponding to different search points; $N^{(i,f)}_a$ represents an integer ambiguity of the i-th TRP. $\beta_{ijp,f}$ represents a weighting coefficient of the double differential (DD-POA) measurement quantity considering TRP $i$, and TRP $j$ and PRU $p$ at frequency $f$. For example:

$$\beta_{ijp,f} = \frac{1}{\sigma^2_{\Phi^{(ij,f)}_{a(p)}} + \sigma^2_{APEG(i)} + \sigma^2_{APEG(j)} + \sigma^2_{APEG(PRU\_p)}},$$

, where $\sigma^2_{\Phi^{(ij,f)}_{a(p)}}$ represents the double differential carrier phase measurement error between the i-th TRP and the j-th TRP, and between the target UE $a$ and PRU $p$ at frequency $f$. $\sigma^2_{APEG(i)}$ and $\sigma^2_{APEG(j)}$ represent ARP and/or PCO error ranges of TRP $i$ and TRP $j$, which are directly reported from TRP i and TRP j to the LMF, or obtained by mapping a reported APEG ID. $\sigma^2_{APEG(PRU\_p)}$ represents an ARP and/or PCO error range of PRU $p$, which is directly reported from PRU p to the LMF, or obtained by mapping a reported APEG ID.

Serving base station and the neighboring base station side procedures are as follows.

1. The serving base station receives a negotiation message transmitted from the LMF, and feeds back the specific multi-frequency information, which is allocated by the serving base station and needs to be reported by the target UE and the PRU, to the LMF; and the neighboring base station receives the specific multi-frequency information, which needs to be reported by the target UE and PRU, forwarded from the LMF.

2. The serving base station and the neighboring base station transmit downlink positioning reference signals (DL PRSs) to the target UE and the PRU respectively.

3. The serving base station and the neighboring base station report second assistance information corresponding to the base station to the LMF respectively.

The second assistance information at least includes one of the following types or any combination:

a cell ID or TRP ID;

a transmit antenna ID or Tx TEG ID of a base station/TRP; or

an ARP and/or PCO error value or APEG ID of a base station/TRP, where each APEG ID of the base station/TRP corresponds to different levels of ARP and/or PCO error respectively, as shown in Table 1.

Embodiment 2: UE based downlink CPP.

For UE based downlink CPP, a PRU notifies a target UE of first measurement quantity information, measurement quality information and first assistance information at multiple frequencies, which are used by the target UE to perform integer ambiguity search and target UE location solving.

Target UE and PRU side procedures are as follows.

1. The target UE and PRU respectively reports a UE capability of supporting multi-frequency processing of M (M is an integer greater than 1) frequencies for downlink CPP to a first positioning node (LMF and/or serving base station). The PRU may provide a UE capability of supporting ARP/PCO absolute error or APEG.

In case that APEG is supported, a mapping table of the APEG ID and APEG value of the PRU is further provided, as shown in Table 2. In case that the target UE and PRU do not support reporting of carrier phase measurement quantity at any frequency, then for the UE capability of each frequency, the target UE and the PRU may further indicate a supported frequency range (*FR1, FR2*), frequency band and carrier and whether it can support reporting of carrier phase measurement quantity at any frequency in the corresponding frequency band or carrier, or can only support reporting of carrier phase measurement quantity at the center frequency of the carrier.

Let $SET\_A=\{FP_1, FP_2,...,FP_M\}$ be a set of all frequencies supported by the 3GPP protocol for reporting carrier phase measurement quantity, where $FP_1 < FP_2 < ... < FP_M$ and they are positive integers greater than or equal to 1, and $FP_m$ (*m=1,2,...,M*) represents a value or ID of the corresponding frequency. For example: when *M=4* or 5, $SET\_A=\{1,2,3,4\}$, or $SET\_A=\{2,4,6,8\}$, or $SET\_A=\{1,2,3,4,5\}$. For different frequency ranges *(FR1, FR2)* and frequency bands, the frequency set *SET_A* that the terminal can support may be different. For example: for *FR1* or frequency band *Band_A*, $SET\_A=\{1,2,3,4\}$; for *FR2* or frequency band *Band_B*, $SET\_A=\{5,6,7,8\}$.

For the downlink CPP, the first positioning node is preferably LMF, or it may be a serving base station, and it is forwarded to the LMF by the serving base station. There are two types of PRU: the first type is a reference UE (or anchor UE), and the second type is a reference TRP. In this embodiment, PRU refers to the first type.

Table 2 Mapping table of APEG ID and APEG value

| APEG ID | APEG value (unit: cm) |
|---------|----------------------|
| 0 | 0.1 |
| 1 | 0.5 |
| 2 | 2.5 |
| 3 | 5 |

In the table, the maximum quantity of APEG IDs is 4, and the value of APEG may be pre-defined by a protocol or notified by signaling, where the signaling may include LPP, RRC, MAC-CE or DCI, etc.

2. The target UE and the PRU respectively receive the frequency configuration information transmitted from the LMF, and measure downlink PRSs of multiple frequencies from different base stations/TRPs based on the configuration information to obtain the CPP measurement quantity and measurement quality of the multiple frequencies.

3. The PRU notifies the target UE of measurement reporting information about multiple frequencies, where the measurement reporting information includes three types: first measurement quantity information, measurement quality information and first assistance information. There are two notification ways: first, forwarding to the target UE through an LMF/serving base station; second, directly notifying the target UE through a sidelink.

3.1. The first measurement quantity information includes one of the following four cases or a combination of multiple cases.

CASE 1: a POA measurement quantity of a same UE receiving antenna at multiple frequencies (i.e., a non-differential for different TRPs).

CASE 2: a single differential PDOA measurement quantity or RSPD measurement quantity of a same UE receiving antenna at multiple frequencies (i.e., a single differential for different TRPs).

CASE 3: a single differential PDOA measurement quantity or RSPD measurement quantity of a same TRP at multiple frequencies (i.e., a single differential for different receiving antennas of a same UE).

CASE 4: a double differential PDOA measurement quantity of different UE receiving antennas and different TRPs (i.e., a double differential for different receiving antennas of a same UE and different TRPs).

3.2. Measurement quality information.

The measurement quality information at least includes one of the following types or a combination: a carrier phase measurement quality indicator (indication information on whether the carrier phase is continuous and whether there is half-cycle ambiguity), a variance or maximum value of carrier phase measurement error, SINR, RSRP and RSRQ, etc.

3.3. First assistance information.

The first assistance information at least includes one of the following types or any combination:

a cell ID or TRP ID corresponding to each measurement quantity and measurement quality;

frequency information corresponding to each measurement quantity and measurement quality;

a receiving antenna ID of PRU or an Rx TEG ID of PRU;

a target PRU ID, and for PRU, further including location information of the PRU; or

an ARP and/or PCO error value of PRU, or APEG ID, where each APEG ID of UE corresponds to different levels of ARP and/or PCO error, as shown in Table 2.

4. The target UE receives the measurement report information of multiple frequencies notified by the PRU, where the measurement report information includes three types: first measurement quantity information, measurement quality information and first assistance information. A location of the target UE is solved based on the above information, pre-obtained base station location information, and ARP and/or PCO error or APEG ID information of the base station, etc. In case that the PRU or the base station/TRP reports an APEG ID, an ARP and/or PCO error range value corresponding to the APEG ID is obtained by mapping based on a predefined criterion.

Example 1: the target UE only selects a positioning measurement quantity corresponding to a PRU whose APEG value is 0.1 cm or 0.5 cm (for example only, the smaller the value, the better) and a positioning measurement quantity corresponding to a TRP whose APEG value is 0.1 cm or 0.5 cm (for example only, the smaller the value, the better) to perform location solving.

Example 2: a cost function of target UE traversal searching for location $\boldsymbol{y}$ based on multiple frequencies and double differential (multiple PRUs) is as follows:

$$\boldsymbol{y}' = \arg\min_{\boldsymbol{y} \in (\boldsymbol{y}_{TDOA} \pm \Delta \boldsymbol{y}_{TDOA})} \sum_i \sum_j \sum_p \sum_f \beta_{ijp,f} \left( \widehat{\varphi}_{a(p)}^{(ij,f)}(\boldsymbol{y}) - \varphi_{a(p)}^{(ij,f)} \right)^2,$$

where $\boldsymbol{y}_{TDOA}$ represents an initial UE location obtained based on an UL/DL-TDOA positioning method, and $\Delta_{\boldsymbol{y}_{TDOA}}$ represents a search radius range centered on the UE initial position. $\varphi_{a(p)}^{(ij,f)} = \varphi_a^{(ij,f)} - \varphi_{(p)}^{(ij,f)}$ represents an actual double differential carrier phase measurement quantity (DD-POA), $\widehat{\varphi}_{a(p)}^{(ij,f)}(\boldsymbol{y}) = \widehat{\varphi}_a^{(ij,f)}(\boldsymbol{y}) - \widehat{\varphi}_{(p)}^{(ij,f)}$ represents a double differential carrier phase calculation quantity (DD-POA), $\widehat{\varphi}_{(p)}^{(ij,f)} = \widehat{\varphi}_{(p)}^{(j,f)} - \widehat{\varphi}_{(p)}^{(i,f)}$ represents a single differential carrier phase calculation quantity of PRU $p$, and $\widehat{\varphi}_{(a)}^{(ij,f)}(\boldsymbol{y}) = \widehat{\varphi}_{(a)}^{(j,f)}(\boldsymbol{y}) - \widehat{\varphi}_{(a)}^{(i,f)}(\boldsymbol{y})$ represents a single differential carrier phase calculation quantity of target UE $a$. $\widehat{\varphi}_a^{(i,f)}(\boldsymbol{y}) = 2\pi \left( f * \frac{\|\boldsymbol{y} - \boldsymbol{q}_{pos_i}\|}{c} - N_a^{(i,f)} \right)$ represents a carrier phase measurement quantity of an i-th TRP; $\boldsymbol{y}$ is

a location of target UE corresponding to different search points; $N_a^{(i,f)}$ represents an integer ambiguity of the i-th TRP. $\beta_{ijp,f}$ represents a weighting coefficient of the double differential (DD-POA) measurement quantity considering TRP $i$, and

$$\beta_{ijp,f} = \frac{1}{\sigma^2_{\Phi_{a(p)}^{(ij,f)}} + \sigma^2_{APEG(i)} + \sigma^2_{APEG(j)} + \sigma^2_{APEG(PRU\_p)}}$$

TRP $j$ and PRU $p$ at frequency $f$. For example: , where $\sigma^2_{\Phi_{a(p)}^{(ij,f)}}$ represents the double differential carrier phase measurement error between the i-th TRP and the j-th TRP, and between the target UE $a$ and PRU $p$ at frequency $f$. $\sigma^2_{APEG(i)}$ and $\sigma^2_{APEG(j)}$ represent ARP and/or PCO error ranges of TRP $i$ and TRP $j$, which are directly reported from TRP i and TRP j to the LMF, or obtained by mapping a reported APEG ID.

$\sigma^2_{APEG(PRU\_p)}$ represents an ARP and/or PCO error range of PRU $p$, which is directly reported from PRU p to the LMF, or obtained by mapping a reported APEG ID.

LMF side procedures are as follows.

1. The LMF receives the UE capability of supporting multi-frequency processing of M frequencies for downlink CPP reported by the target UE and the PRU respectively, and the UE capability of the PRU of supporting ARP/PCO absolute error or APEG. In case that APEG is supported, a mapping table of the APEG ID and APEG value of the PRU is further given, as shown in Table 2. In case that the target UE and the PRU do not support reporting of carrier phase measurement quantity at any frequency, for the UE capability of each frequency, the target UE and the PRU may further indicate the supported frequency range (*FR1, FR2*), frequency band and carrier, and whether it can support reporting of carrier phase measurement quantity at any frequency in the corresponding frequency band or carrier, or can only support reporting of carrier phase measurements at the center frequency of the carrier.

Let *SET_A={FP$_1$, FP$_2$,...,FP$_M$}* be a set of all frequencies supported by the 3GPP protocol for reporting carrier phase measurement quantity, where *FP$_1$<FP$_2$<...<FP$_M$* and they are positive integers greater than or equal to 1, and *FP$_m$* (*m=1,2,...,M*) represents a value or ID of the corresponding frequency. For example: when *M=4* or 5, *SET_A={1,2,3,4}*, or *SET_A={2,4,6,8}*, or *SET_A={1,2,3,4,5}*. For different frequency ranges (*FR1, FR2*) and frequency bands, the frequency set *SET_A* that the terminal can support may be different. For example: for *FR1* or frequency band *Band_A, SET_A= {1,2,3,4}*; for *FR2* or frequency band *Band_B, SET_A={5,6,7,8}*.

2. After negotiating with the serving base station, the LMF obtains the specific multi-frequency information which is allocated by the serving base station and needs to be reported by the target UE and the PRU, that is, the frequency configuration information. The frequency configuration information includes a frequency set *SET_B ={FP$_1$, FP$_2$,...,FP$_{M1}$}*, where *FP$_m$* (*m=1,2,...,M1*) represents a value or ID of a corresponding frequency, and *M1* is a quantity of frequencies.

3. The LMF notifies the target UE and the PRU of the specific multi-frequency information that each of the target UE and the PRU needs to measure, and notifies a neighboring base station of the above information.

4. The LMF notifies the target UE of second assistance information corresponding to the serving base station and the neighboring base station.

The second assistance information at least includes one of the following types or any combination:

a cell ID or TRP ID;

a transmit antenna ID or Tx TEG ID of a base station/TRP; or

an ARP and/or PCO error value or APEG ID of a base station/TRP, where each APEG ID of the base station/TRP corresponds to different levels of ARP and/or PCO error respectively.

Serving base station and the neighboring base station side procedures are as follows.

1. The serving base station receives a negotiation message transmitted from the LMF, and feeds back the specific multi-frequency information, which is allocated by the serving base station and needs to be reported by the target UE and the PRU, to the LMF, that is, the frequency configuration information; the neighboring base station receives the frequency configuration information for the target UE and the PRU forwarded from the LMF. The frequency configuration information includes a frequency set $SET\_B =\{FP_1, FP_2, ..., FP_{M1}\}$, where $FP_m$ ($m=1,2, ..., M1$) represents a value or ID of a corresponding frequency, and $M1$ is a quantity of frequencies.

2. The serving base station and the neighboring base station transmit downlink positioning reference signals (DL PRSs) to the target UE and the PRU respectively.

3. The serving base station and the neighboring base station report second assistance information corresponding to the base station to the LMF respectively.

The second assistance information at least includes one of the following types or any combination:

a cell ID or TRP ID;

a transmit antenna ID or Tx TEG ID of a base station/TRP; or

an ARP and/or PCO error value or APEG ID of a base station/TRP, where each APEG ID of the base station/TRP corresponds to different levels of ARP and/or PCO error respectively, as shown in Table 2.

Embodiment 3: UE assisted uplink CPP.

For UE assisted unlink CPP, a serving base station and a neighboring base station report second measurement quantity information, measurement quality information and third assistance information at multiple frequencies to an LMF respectively, which are used by the LMF to perform integer ambiguity search and position solving of a target UE.
Target UE and PRU side procedures are as follows.

1. The target UE and PRU respectively reports a UE capability of supporting multi-frequency processing of M (M is an integer greater than 1) frequencies for downlink CPP to a first positioning node (LMF and/or serving base station). The PRU may provide a UE capability of supporting ARP/PCO absolute error or APEG.

In case that APEG is supported, a mapping table of the APEG ID and APEG value of the PRU is further provided, as shown in Table 3. In case that the target UE and PRU do not support reporting of carrier phase measurement quantity at any frequency, then for the UE capability of each frequency, the target UE and the PRU may further indicate a supported frequency range (*FR1, FR2*), frequency band and carrier and whether it can support reporting of carrier phase measurement quantity at any frequency in the corresponding frequency band or carrier, or can only support reporting of carrier phase measurement quantity at the center frequency of the carrier.
Let $SET\_A=\{FP_1, FP_2,...,FP_M\}$ be a set of all frequencies supported by the 3GPP protocol for reporting carrier phase measurement quantity, where $FP_1<FP_2<... <FP_M$ and they are positive integers greater than or equal to 1, and $FP_m$ ($m=1,2,...,M$) represents a value or ID of the corresponding frequency. For example: when $M=4$ or 5, $SET\_A=\{1,2,3,4\}$, or $SET\_A=\{2,4,6,8\}$, or $SET\_A=\{1,2,3,4,5\}$. For different frequency ranges (*FR1, FR2*) and frequency bands, the frequency set $SET\_A$ that the terminal can support may be different. For example: for *FR1* or frequency band *Band_A*, $SET\_A=\{1,2,3,4\}$; for *FR2* or frequency band *Band_B*, $SET\_A=\{5,6,7,8\}$.
For the downlink CPP, the first positioning node is preferably LMF, or it may be a serving base station, and it is forwarded to the LMF by the serving base station. There are two types of PRU: the first type is a reference UE (or anchor UE), and the second type is a reference TRP. In this embodiment, PRU refers to the first type.

Table 3 Mapping table of APEG ID and APEG value

| APEG ID | APEG value (unit: cm) |
| --- | --- |
| 0 | 0.1 |
| 1 | 0.25 |
| 2 | 0.5 |
| 3 | 1 |
| 4 | 2.5 |

(continued)

| APEG ID | APEG value (unit: cm) |
|---|---|
| 5 | 5 |

In the table, the maximum quantity of APEG IDs is 6, and the value of APEG may be pre-defined by a protocol or notified by signaling, where the signaling may include LPP, RRC, MAC-CE or DCI, etc.

2. The target UE and the PRU receive the frequency configuration information notified by the serving base station respectively, and transmit multi-frequency uplink SRS-Pos to different base stations/TRPs based on the configuration information.

3. The target UE and the PRU report corresponding fourth assistance information to the LMF.

The fourth assistance information at least includes one of the following types or any combination:

a transmit antenna ID of target UE/PRU or a Tx TEG ID of target UE/PRU;

a target UE/PRU ID, and for PRU, further including location information of the PRU; or

an ARP and/or PCO error value or APEG ID of PRU, where each APEG ID of the UE corresponds to different levels of ARP and/or PCO errors.

LMF side procedures are as follows.

1. The LMF receives the UE capability of supporting multi-frequency processing of M frequencies for downlink CPP reported by the target UE and the PRU respectively, and the UE capability of the PRU of supporting ARP/PCO absolute error or APEG. In case that APEG is supported, a mapping table of the APEG ID and APEG value of the PRU is further given, as shown in Table 3. In case that the target UE and the PRU do not support reporting of carrier phase measurement quantity at any frequency, for the UE capability of each frequency, the target UE and the PRU may further indicate the supported frequency range *(FR1, FR2),* frequency band and carrier, and whether it can support reporting of carrier phase measurement quantity at any frequency in the corresponding frequency band or carrier, or can only support reporting of carrier phase measurements at the center frequency of the carrier.

Let $SET\_A=\{FP_1, FP_2,...,FP_M\}$ be a set of all frequencies supported by the 3GPP protocol for reporting carrier phase measurement quantity, where $FP_1<FP_2<...<FP_M$ and they are positive integers greater than or equal to 1, and $FP_m$ *(m=1,2,...,M)* represents a value or ID of the corresponding frequency. For example: when *M=4* or 5, $SET\_A=\{1,2,3,4\}$, or $SET\_A=\{2,4,6,8\}$, or $SET\_A=\{1,2,3,4,5\}$. For different frequency ranges (FR1, FR2) and frequency bands, the frequency set *SET_A* that the terminal can support may be different. For example: for *FR1* or frequency band *Band_A, SET_A= {1,2,3,4}*; for *FR2* or frequency band *Band_B, SET_A={5,6,7,8}*.

2. After negotiating with the serving base station, the LMF obtains frequency configuration information for the target UE and the PRU. The frequency configuration information includes a frequency set $SET\_B =\{FP_1, FP_2,...,FP_{M1}\}$, where $FP_m$ *(m=1,2,...,M1)* represents a value or ID of a corresponding frequency, and *M1* is a quantity of frequencies.

3. The LMF notifies the neighboring base station of the frequency configuration information for the target UE and the PRU.

4. The LMF receives measurement reporting information of multiple frequencies of the target UE and the PRU reported by the serving base station and the neighboring base station, where the measurement reporting information includes three types: second measurement quantity information, measurement quality information and third assistance information. A location of the target UE is solved based on the above information, pre-obtained base station location information, and ARP and/or PCO error or APEG ID information of the base station, etc. In case that the UE or base station/TRP reports the APEG ID, an ARP and/or PCO error range value corresponding to the APEG ID is mapped based on a predefined criterion.

Example 1: the LMF only selects a positioning measurement quantity corresponding to a PRU whose APEG value is 0.1 cm or 0.25 cm (for example only, the smaller the value, the better) and a positioning measurement quantity corresponding to a TRP whose APEG value is 0.1 cm or 0.25 cm (for example only, the smaller the value, the better) to perform location solving.

Example 2: a cost function of LMF traversal searching for target UE location y based on multiple frequencies and double differential (multiple PRUs) is as follows:

$$\boldsymbol{y}' = \arg \min_{\boldsymbol{y} \in (\boldsymbol{y}_{TDOA} \pm \Delta \boldsymbol{y}_{TDOA})} \Sigma_i \Sigma_j \Sigma_p \Sigma_f \beta_{ijp,f} \left( \widehat{\varphi}_{a(p)}^{(ij,f)}(\boldsymbol{y}) - \varphi_{a(p)}^{(ij,f)} \right)^2,$$

where $\boldsymbol{y}_{TDOA}$ represents an initial UE location obtained based on an UL/DL-TDOA positioning method, and $\Delta_{\boldsymbol{y}_{TDOA}}$ represents a search radius range centered on the UE initial position. $\varphi_{a(p)}^{(ij,f)} = \varphi_a^{(ij,f)} - \varphi_{(p)}^{(ij,f)}$ represents an actual double differential carrier phase measurement quantity (DD-POA), $\widehat{\varphi}_{a(p)}^{(ij,f)}(\boldsymbol{y}) = \widehat{\varphi}_a^{(ij,f)}(\boldsymbol{y}) - \widehat{\varphi}_{(p)}^{(ij,f)}$ represents a double differential carrier phase calculation quantity (DD-POA), $\widehat{\varphi}_{(p)}^{(ij,f)} = \widehat{\varphi}_{(p)}^{(j,f)} - \widehat{\varphi}_{(p)}^{(i,f)}$ represents a single differential carrier phase calculation quantity of PRU $p$, and $\widehat{\varphi}_{(a)}^{(ij,f)}(\boldsymbol{y}) = \widehat{\varphi}_{(a)}^{(j,f)}(\boldsymbol{y}) - \widehat{\varphi}_{(a)}^{(i,f)}(\boldsymbol{y})$ represents a single differential carrier phase calculation quantity of target UE $a$. $\widehat{\varphi}_a^{(i,f)}(\boldsymbol{y}) = 2\pi \left( f * \frac{\|\boldsymbol{y} - q_{pos_i}\|}{c} - N_a^{(i,f)} \right)$ represents a carrier phase measurement quantity of an i-th TRP; y is a location of target UE corresponding to different search points; $N_a^{(i,f)}$ represents an integer ambiguity of the i-th TRP. $\beta_{ijp,f}$ represents a weighting coefficient of the double differential (DD-POA) measurement quantity considering TRP $i$, and TRP $j$ and PRU $p$ at frequency $f$. For example: $\beta_{ijp,f} = \frac{1}{\sigma_{\Phi_{a(p)}^{(ij,f)}}^2 + \sigma_{APEG(i)}^2 + \sigma_{APEG(j)}^2 + \sigma_{APEG(PRU\_p)}^2}$, where $\sigma_{\Phi_{a(p)}^{(ij,f)}}^2$ represents the double differential carrier phase measurement error between the i-th TRP and the j-th TRP, and between the target UE $a$ and PRU $p$ at frequency $f$. $\sigma_{APEG(i)}^2$ and $\sigma_{APEG(j)}^2$ represent ARP and/or PCO error ranges of TRP $i$ and TRP $j$, which are directly reported from TRP i and TRP j to the LMF, or obtained by mapping a reported APEG ID. $\sigma_{APEG(PRU\_p)}^2$ represents an ARP and/or PCO error range of PRU $p$, which is directly reported from PRU p to the LMF, or obtained by mapping a reported APEG ID.

Serving base station and the neighboring base station side procedures are as follows.

1. The serving base station receives the negotiation message transmitted from the LMF, directly transmits the frequency configuration information to the target UE and the PRU, and notifies the LMF or the neighboring base station of the frequency configuration information allocated to the target UE and the PRU through the NRPPa interface between the LMF and the LMF or the Xn interface between the LMF and the neighboring base station.

2. The serving base station and the neighboring base station measures the uplink positioning reference signals (UL SRS-Pos) transmitted from the target UE and the PRU respectively.

3. The serving base station and the neighboring base station reports the measurement reporting information of multiple frequencies to the LMF respectively, where the measurement reporting information includes three types: second measurement quantity information, measurement quality information and third assistance information.

3.1. The second measurement quantity information includes one of the following four cases or a combination of multiple cases.

CASE 5: a POA measurement quantity of a same TRP receiving antenna at multiple frequencies (non-differential for target UE and PRU).

CASE 6: a single differential PDOA measurement quantity for a same TRP receiving antenna for different UEs at multiple frequencies (single differential for target UE and PRU).

CASE 7: a single differential PDOA measurement quantity of a same UE for different TRP receiving antennas at multiple frequencies (single differential for different receiving antennas of a same UE).

CASE 8: a double differential PDOA measurement quantity of multiple frequencies (double differential for different receiving antennas of a same UE and different TRPs).

3.2. Measurement quality information.

The measurement quality at least includes one of the following types or a combination: a carrier phase measurement quality indicator (whether the carrier phase is continuous and whether there is half-cycle ambiguity), a variance or maximum value of carrier phase measurement error, SINR, RSRP or RSRQ, etc.

3.3. Third assistance information.

The third assistance information at least includes one of the following types or any combination:

a cell ID or TRP ID;

a receiving antenna ID or Tx TEG ID of a base station/TRP; or

an ARP and/or PCO error value or APEG ID of a base station/TRP, where each APEG ID of the base station/TRP corresponds to different levels of ARP and/or PCO error respectively, as shown in Table 3.

The methods and apparatuses provided by the embodiments of the present application are based on the same concept. Since the methods and apparatuses solve problems based on similar concept, the implementations of the methods and the apparatuses may refer to each other, and the repeated parts are not repeated.

FIG. 4 is a schematic structural diagram of a terminal according to an embodiment of the present application. As shown in FIG. 4, the terminal includes a memory 420, a transceiver 410 and a processor 400, where the processor 400 and memory 420 may be physically arranged separately.

The memory 420 is used for storing a computer program, and the transceiver 410 is used for receiving and transmitting data under control of the processor 400.

In an embodiment, the transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like. For different user equipment, a user interface 430 may be an interface capable of externally or internally connecting the required equipment, and the connected equipment includes, but not limited to, a keypad, a display, a speaker, a microphone, a joystick, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field-programmable gate array (FPGA), or a complex programmable logic device (CPLD), the processor may also use a multi-core architecture.

The processor 400 calls the computer program stored in the memory 420 to execute any of the methods provided by the embodiments of the present application in accordance with the obtained executable instructions. For example, the method includes: a target terminal and/or a positioning reference unit (PRU) transmits terminal capability information to a first positioning node, where the terminal capability information is used to indicate a multi-frequency processing capability of the target terminal and/or the PRU; and receiving frequency configuration information transmitted from the first positioning node, and performing multi-frequency positioning based on multiple frequencies indicated by the frequency configuration information.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, performing the multi-frequency positioning based on the multiple frequencies indicated by the frequency configuration information includes:

measuring downlink positioning reference signals based on the multiple frequencies indicated by the frequency configuration information; or

transmitting uplink positioning reference signals based on the multiple frequencies indicated by the frequency configuration information.

In some embodiments, after measuring the downlink positioning reference signals, the method further includes: transmitting first measurement reporting information, where the first measurement reporting information includes first measurement quantity information, measurement quality information and first assistance information.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, transmitting the first measurement reporting information includes:

the target terminal and the PRU transmit the first measurement reporting information to a location management function (LMF); or

the PRU transmits the first measurement reporting information to the target terminal.

In some embodiments, the PRU transmits the first measurement reporting information to the target terminal includes:

the PRU transmits the first measurement reporting information to the target terminal through a sidelink between the PRU and the target terminal; or

the PRU transmits the first measurement reporting information to the target terminal through an LMF or a network device.

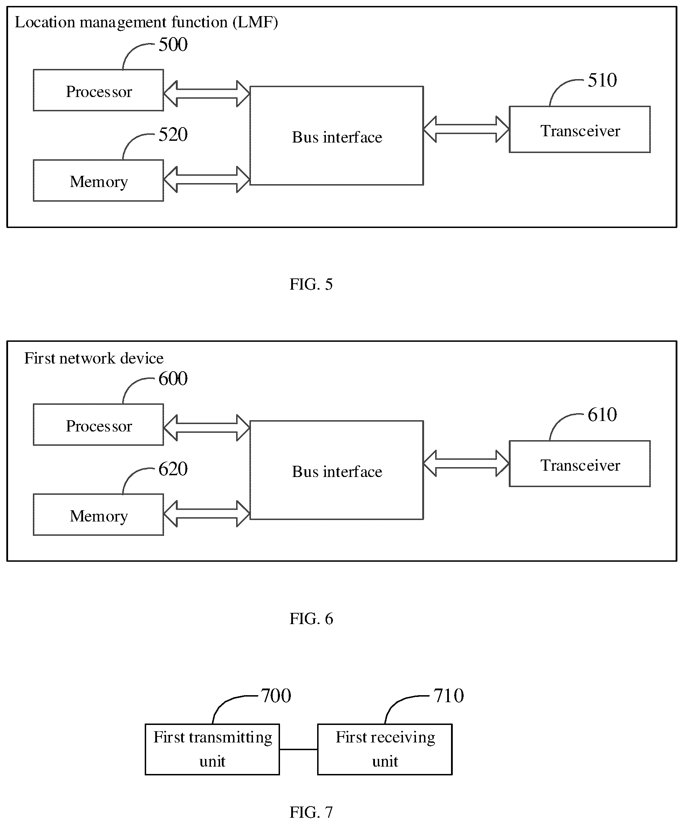

FIG. 5 is a schematic structural diagram of a location management function (LMF) according to an embodiment of the present application. As shown in FIG. 5, the LMF includes a memory 520, a transceiver 510 and a processor 500, where the processor 500 and memory 520 may be physically arranged separately.

The memory 520 is used for storing a computer program, and the transceiver 510 is used for receiving and transmitting data under control of the processor 500.

In an embodiment, the transceiver 510 is used for receiving and transmitting data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a CPU, an ASIC, an FPGA, or a CPLD, the processor may also use a multi-core architecture.

The processor 500 calls the computer program stored in the memory 520 to execute any of the methods provided by the embodiments of the present application in accordance with the obtained executable instructions. For example, the method includes: receiving terminal capability information of a target terminal and/or a positioning reference unit (PRU), where the terminal capability information is used to indicate a multi-frequency processing capability of the target terminal and/or the PRU; determining frequency configuration information for the target terminal and/or the PRU based on the terminal capability information, where the frequency configuration information is used for multi-frequency positioning; and transmitting the frequency configuration information to the target terminal and/or the PRU.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, determining the frequency configuration information for the target terminal and/or the PRU based on the terminal capability information includes:

transmitting a negotiation message to a first network device based on the terminal capability information, where the negotiation message is used to indicate the first network device to determine the frequency configuration information for the target terminal or the PRU; and

receiving the frequency configuration information for the target terminal or the PRU transmitted from the first network device.

In some embodiments, after determining the frequency configuration information for the target terminal and/or the PRU, the method further includes:
transmitting the frequency configuration information for the target terminal and/or the PRU to a second network device.
In some embodiments, after transmitting the frequency configuration information to the target terminal and/or the PRU, the method further includes:

receiving first measurement reporting information transmitted from the target terminal and/or the PRU, where the first measurement reporting information includes first measurement quantity information, measurement quality information and first assistance information; and/or,

receiving second assistance information transmitted from a first network device and a second network device.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, the second assistance information includes one or more of the following:

a cell identifier or a network device identifier of a network device;

a transmit antenna identifier of a network device;

a transmission timing error group (TEG) identifier of a network device;

an antenna reference point (ARP) and/or phase center offset (PCO) error value of a network device; or

an ARP/PCO error group (APEG) identifier of a network device.

In some embodiments, the method further includes:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) of a network device.

In some embodiments, after receiving the second assistance information transmitted from the first network device and the second network device, the method further includes:
transmitting the second assistance information to the target terminal.

In some embodiments, after transmitting the frequency configuration information to the target terminal and/or the PRU, the method further includes:

receiving second measurement reporting information transmitted from a network device, where the second measurement reporting information includes second measurement quantity information, measurement quality information and third assistance information; and

receiving fourth assistance information transmitted from the target terminal and/or the PRU.

In some embodiments, the second measurement quantity information includes one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the third assistance information includes one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device;

an ARP/PCO error group (APEG) identifier of the network device.

In some embodiments, the fourth assistance information includes one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

In some embodiments, the method further includes:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) of the network device.
FIG. 6 is a schematic structural diagram of a first network device according to an embodiment of the present application. As shown in FIG. 6, the first network device includes a memory 620, a transceiver 610 and a processor 600, where the processor 600 and memory 620 may be physically arranged separately.
The memory 620 is used for storing a computer program, and the transceiver 610 is used for receiving and transmitting data under control of the processor 600.

In an embodiment, the transceiver 610 is used for receiving and transmitting data under control of the processor 600.

In FIG. 6, a bus architecture may include any number of interconnected buses and bridges, which are linked together through various circuits of one or more processors represented by the processor 600 and one or more memories represented by the memory 620. The bus architecture may also link together various other circuits, such as peripherals, voltage regulators, and power management circuits, etc., which are well known in the art, and therefore are not further described in the present application. The bus interface provides an interface. The transceiver 610 may include multiple elements, i.e., including a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a CPU, an ASIC, an FPGA, or a CPLD, the processor may also use a multi-core architecture.

The processor 600 calls the computer program stored in the memory 620 to execute any of the methods provided by the embodiments of the present application in accordance with the obtained executable instructions. For example, the method includes: determining frequency configuration information for a target terminal and/or a positioning reference unit (PRU), where the frequency configuration information is used for multi-frequency positioning; and transmitting the frequency configuration information to the target terminal and/or the PRU.

In some embodiments, determining the frequency configuration information for the target terminal and/or the PRU includes:

receiving a negotiation message transmitted from a location management function (LMF), where the negotiation message is used to indicate a first network device to determine the frequency configuration information for the target terminal or the PRU; and

determining the frequency configuration information for the target terminal or the PRU based on the negotiation message.

In some embodiments, after determining the frequency configuration information for the target terminal and/or the PRU, the method further includes:
transmitting the frequency configuration information for the target terminal and/or the PRU to a location management function (LMF) and a second network device.

In some embodiments, after transmitting the frequency configuration information to the target terminal and/or the PRU, the method further includes:
transmitting second measurement reporting information to a location management function (LMF), where the second measurement reporting information includes second measurement quantity information, measurement quality information and third assistance information.

It should be noted that the above terminal, LMF, and first network device provided by the embodiments of the present application may implement all the method steps implemented by the above method embodiments, and may achieve the same effect. The same parts and beneficial effects as the same method embodiments are not repeated in the present application.

FIG. 7 is a first schematic structural diagram of an apparatus for multi-frequency positioning according to an embodiment of the present application. As shown in FIG. 7, the apparatus includes:

a first transmitting unit 700, used for a target terminal and/or a positioning reference unit (PRU) to transmit terminal capability information to a first positioning node, where the terminal capability information is used to indicate a multi-frequency processing capability of the target terminal and/or the PRU; and

a first receiving unit 710, used for receiving frequency configuration information transmitted from the first positioning node, and performing multi-frequency positioning based on multiple frequencies indicated by the frequency configuration information.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, performing the multi-frequency positioning based on the multiple frequencies indicated by the frequency configuration information includes:

measuring downlink positioning reference signals based on the multiple frequencies indicated by the frequency configuration information; or

transmitting uplink positioning reference signals based on the multiple frequencies indicated by the frequency configuration information.

In some embodiments, the first transmitting unit 700 is further used for:
transmitting first measurement reporting information, where the first measurement reporting information includes first measurement quantity information, measurement quality information and first assistance information.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, transmitting the first measurement reporting information includes:

the target terminal and the PRU transmit the first measurement reporting information to a location management function (LMF); or

the PRU transmits the first measurement reporting information to the target terminal.

In some embodiments, the PRU transmits the first measurement reporting information to the target terminal includes:

the PRU transmits the first measurement reporting information to the target terminal through a sidelink between the PRU and the target terminal; or

the PRU transmits the first measurement reporting information to the target terminal through an LMF or a network device.

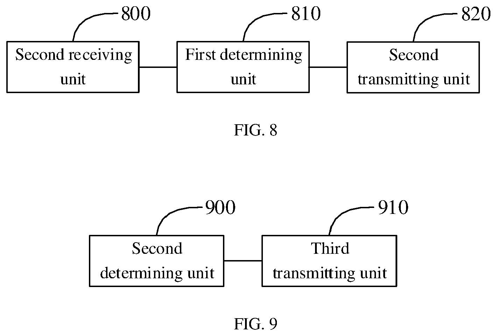

FIG. 8 is a second schematic structural diagram of an apparatus for multi-frequency positioning according to an embodiment of the present application. As shown in FIG. 8, the apparatus includes:

a second receiving unit 800, used for receiving terminal capability information of a target terminal and/or a positioning reference unit (PRU), where the terminal capability information is used to indicate a multi-frequency processing capability of the target terminal and/or the PRU;

a first determining unit 810, used for determining frequency configuration information for the target terminal and/or the PRU based on the terminal capability information, where the frequency configuration information is used for multi-frequency positioning; and

a second transmitting unit 820, used for transmitting the frequency configuration information to the target terminal and/or the PRU.

In some embodiments, the multi-frequency processing capability of the target terminal and/or the PRU includes one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

In some embodiments, the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

In some embodiments, determining the frequency configuration information for the target terminal and/or the PRU based on the terminal capability information includes:

transmitting a negotiation message to a first network device based on the terminal capability information, where the negotiation message is used to indicate the first network device to determine the frequency configuration information for the target terminal or the PRU; and

receiving the frequency configuration information for the target terminal or the PRU transmitted from the first network device.

In some embodiments, the second transmitting unit 820 is further used for:
transmitting the frequency configuration information for the target terminal and/or the PRU to a second network device.
In some embodiments, the second receiving unit 800 is further used for:

receiving first measurement reporting information transmitted from the target terminal and/or the PRU, where the first measurement reporting information includes first measurement quantity information, measurement quality information and first assistance information; and/or,

receiving second assistance information transmitted from a first network device and a second network device.

In some embodiments, the first measurement quantity information includes one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the first assistance information includes one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of target terminal or PRU;

a reception timing error group (TEG) identifier of target terminal or PRU;

an identifier of target terminal or PRU;

location information of PRU;

an antenna reference point (ARP) and/or phase center offset (PCO) error value of PRU; or

an ARP/PCO error group (APEG) identifier of PRU.

In some embodiments, the second assistance information includes one or more of the following:

a cell identifier or a network device identifier of a network device;

a transmit antenna identifier of a network device;

a transmission timing error group (TEG) identifier of a network device;

an antenna reference point (ARP) and/or phase center offset (PCO) error value of a network device; or

an ARP/PCO error group (APEG) identifier of a network device.

In some embodiments, the apparatus further includes:
a solving unit, used for solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) of a network device.
In some embodiments, the second transmitting unit 820 is further used for:
transmitting the second assistance information to the target terminal.
In some embodiments, the second receiving unit 800 is further used for:

receiving second measurement reporting information transmitted from a network device, where the second measurement reporting information includes second measurement quantity information, measurement quality information and third assistance information; and

receiving fourth assistance information transmitted from the target terminal and/or the PRU.

In some embodiments, the second measurement quantity information includes one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

In some embodiments, the measurement quality information includes one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

In some embodiments, the third assistance information includes one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device;

an ARP/PCO error group (APEG) identifier of the network device.

In some embodiments, the fourth assistance information includes one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

In some embodiments, the apparatus further includes:
a solving unit, used for solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) of the network device.

FIG. 9 is a third schematic structural diagram of an apparatus for multi-frequency positioning according to an embodiment of the present application. As shown in FIG. 9, the apparatus includes:

a second determining unit 900, used for determining frequency configuration information for a target terminal and/or a positioning reference unit (PRU), where the frequency configuration information is used for multi-frequency positioning; and

a third transmitting unit 910, used for transmitting the frequency configuration information to the target terminal and/or the PRU.

In some embodiments, determining the frequency configuration information for the target terminal and/or the PRU includes:

receiving a negotiation message transmitted from a location management function (LMF), where the negotiation message is used to indicate a first network device to determine the frequency configuration information for the target terminal or the PRU; and

determining the frequency configuration information for the target terminal or the PRU based on the negotiation message.

In some embodiments, the third transmitting unit 910 is further used for:
transmitting the frequency configuration information for the target terminal and/or the PRU to a location management function (LMF) and a second network device.

In some embodiments, the third transmitting unit 910 is further used for:
transmitting second measurement reporting information to a location management function (LMF), where the second measurement reporting information includes second measurement quantity information, measurement quality information and third assistance information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor -readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer-readable storage medium storing a computer program that cause a computer to perform the steps of the method for multi-frequency positioning described above.

It should be noted here that the computer-readable storage medium according to the embodiments of the present application may implement all the method steps implemented by the above method embodiments, and may achieve the same effect. The same parts and beneficial effects as the same method embodiments are not repeated here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It is understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1.   A method for multi-frequency positioning, comprising:

a target terminal and/or a positioning reference unit (PRU) transmits terminal capability information to a first positioning node, wherein the terminal capability information is used to indicate a multi-frequency processing capability of the target terminal and/or the PRU; and
receiving frequency configuration information transmitted from the first positioning node, and performing multi-frequency positioning based on multiple frequencies indicated by the frequency configuration information.

2.   The method of claim 1, wherein the multi-frequency processing capability of the target terminal and/or the PRU comprises one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

3. The method of claim 1 or 2, wherein the terminal capability information transmitted from the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

4. The method of any of claims 1 to 3, wherein performing the multi-frequency positioning based on the multiple frequencies indicated by the frequency configuration information comprises:

measuring downlink positioning reference signals based on the multiple frequencies indicated by the frequency configuration information; or

transmitting uplink positioning reference signals based on the multiple frequencies indicated by the frequency configuration information.

5. The method of claim 4, wherein after measuring the downlink positioning reference signals, the method further comprises:

transmitting first measurement reporting information, wherein the first measurement reporting information comprises first measurement quantity information, measurement quality information and first assistance information.

6. The method of claim 5, wherein the first measurement quantity information comprises one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

7. The method of claim 5, wherein the measurement quality information comprises one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

8. The method of claim 5, wherein the first assistance information comprises one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of the target terminal or the PRU;

a reception timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

9. The method of any of claims 5 to 8, wherein transmitting the first measurement reporting information comprises:

   the target terminal and the PRU transmit the first measurement reporting information to a location management function (LMF); or
   the PRU transmits the first measurement reporting information to the target terminal.

10. The method of claim 9, wherein the PRU transmits the first measurement reporting information to the target terminal comprises:

    the PRU transmits the first measurement reporting information to the target terminal through a sidelink between the PRU and the target terminal; or
    the PRU transmits the first measurement reporting information to the target terminal through an LMF or a network device.

11. A method for multi-frequency positioning, comprising:

    receiving terminal capability information of a target terminal and/or a positioning reference unit (PRU), wherein the terminal capability information is used to indicate a multi-frequency processing capability of the target terminal and/or the PRU;
    determining frequency configuration information for the target terminal and/or the PRU based on the terminal capability information, wherein the frequency configuration information is used for multi-frequency positioning; and
    transmitting the frequency configuration information to the target terminal and/or the PRU.

12. The method of claim 11, wherein the multi-frequency processing capability of the target terminal and/or the PRU comprises one or more of the following:

    a frequency range, a frequency band or a carrier supported by the target terminal and/or the PRU;
    all frequencies in a first frequency range, a first frequency band or a first carrier supported by the target terminal and/or the PRU;
    a center frequency in a first frequency range, a first frequency band or a first carrier supported by the target terminal and/or the PRU; or
    a frequency set supported by the target terminal and/or the PRU.

13. The method of claim 11 or 12, wherein the terminal capability information of the PRU is further used to indicate one or more of the following:

    a capability of the PRU supporting an antenna reference point (ARP) and/or phase center offset (PCO) absolute error;
    a capability of the PRU supporting an ARP/PCO error group (APEG); or
    a mapping relationship between an APEG identifier corresponding to the PRU and an APEG value.

14. The method of any of claims 11 to 13, wherein determining the frequency configuration information for the target terminal and/or the PRU based on the terminal capability information comprises:

    transmitting a negotiation message to a first network device based on the terminal capability information, wherein the negotiation message is used to indicate the first network device to determine the frequency configuration information for the target terminal or the PRU; and
    receiving the frequency configuration information for the target terminal or the PRU transmitted from the first network device.

15. The method of any of claims 11 to 14, wherein after determining the frequency configuration information for the target terminal and/or the PRU, the method further comprises:
    transmitting the frequency configuration information for the target terminal and/or the PRU to a second network device.

16. The method of any of claims 11 to 15, wherein after transmitting the frequency configuration information to the target terminal and/or the PRU, the method further comprises:

receiving first measurement reporting information transmitted from the target terminal and/or the PRU, wherein the first measurement reporting information comprises first measurement quantity information, measurement quality information and first assistance information; and/or,

receiving second assistance information transmitted from a first network device and a second network device.

17. The method of claim 16, wherein the first measurement quantity information comprises one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

18. The method of claim 16, wherein the measurement quality information comprises one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

19. The method of claim 16, wherein the first assistance information comprises one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of the target terminal or the PRU;

a reception timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

20. The method of claim 16, wherein the second assistance information comprises one or more of the following:

a cell identifier or a network device identifier of a network device;

a transmit antenna identifier of a network device;

a transmission timing error group (TEG) identifier of a network device;

an antenna reference point (ARP) and/or phase center offset (PCO) error value of a network device; or

an ARP/PCO error group (APEG) identifier of a network device.

21. The method of any of claims 16 to 20, wherein the method further comprises:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) identifier of a network device.

22. The method of claim 16 or 20, wherein after receiving the second assistance information transmitted from the first network device and the second network device, the method further comprises:
transmitting the second assistance information to the target terminal.

23. The method of any of claims 11 to 15, wherein after transmitting the frequency configuration information to the target terminal and/or the PRU, the method further comprises:

receiving second measurement reporting information transmitted from a network device, wherein the second measurement reporting information comprises second measurement quantity information, measurement quality information and third assistance information; and

receiving fourth assistance information transmitted from the target terminal and/or the PRU.

24. The method of claim 23, wherein the second measurement quantity information comprises one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

25. The method of claim 23, wherein the measurement quality information comprises one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

26. The method of claim 23, wherein the third assistance information comprises one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device; or

an ARP/PCO error group (APEG) identifier of the network device.

27. The method of claim 23, wherein the fourth assistance information comprises one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

28. The method of any of claims 23 to 27, wherein the method further comprises:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) identifier of the network device.

29. A method for multi-frequency positioning, comprising:

determining frequency configuration information for a target terminal and/or a positioning reference unit (PRU), wherein the frequency configuration information is used for multi-frequency positioning; and

transmitting the frequency configuration information to the target terminal and/or the PRU.

30. The method of claim 29, wherein determining the frequency configuration information for the target terminal and/or the PRU comprises:

receiving a negotiation message transmitted from a location management function (LMF), wherein the negotiation message is used to indicate a first network device to determine the frequency configuration information for the target terminal or the PRU; and
determining the frequency configuration information for the target terminal or the PRU based on the negotiation message.

31. The method of claim 29 or 30, wherein after determining the frequency configuration information for the target terminal and/or the PRU, the method further comprises:
transmitting the frequency configuration information for the target terminal and/or the PRU to a location management function (LMF) and a second network device.

32. The method of any of claims 29 to 31, wherein after transmitting the frequency configuration information to the target terminal and/or the PRU, the method further comprises:
transmitting second measurement reporting information to a location management function (LMF), wherein the second measurement reporting information comprises second measurement quantity information, measurement quality information and third assistance information.

33. A terminal, comprising a memory, a transceiver and a processor,

wherein the memory is used for storing a computer program, the transceiver is used for receiving and transmitting data under control of the processor, and the processor is used for reading the computer program in the memory and performing the following operations:
a target terminal and/or a positioning reference unit (PRU) transmits terminal capability information to a first positioning node, wherein the terminal capability information is used to indicate a multi-frequency processing capability of the target terminal and/or the PRU; and
receiving frequency configuration information transmitted from the first positioning node, and performing multi-frequency positioning based on multiple frequencies indicated by the frequency configuration information.

34. The terminal of claim 33, wherein the multi-frequency processing capability of the target terminal and/or the PRU comprises one or more of the following:

a frequency range, a frequency band or a carrier supported by the target terminal and/or the PRU;
all frequencies in a first frequency range, a first frequency band or a first carrier supported by the target terminal and/or the PRU;
a center frequency in a first frequency range, a first frequency band or a first carrier supported by the target terminal and/or the PRU; or
a frequency set supported by the target terminal and/or the PRU.

35. The terminal of claim 33 or 34, wherein the terminal capability information transmitted from the PRU is further used to indicate one or more of the following:

a capability of the PRU supporting an antenna reference point (ARP) and/or phase center offset (PCO) absolute error;
a capability of the PRU supporting an ARP/PCO error group (APEG); or
a mapping relationship between an APEG identifier corresponding to the PRU and an APEG value.

36. The terminal of any of claims 33 to 35, wherein performing the multi-frequency positioning based on the multiple frequencies indicated by the frequency configuration information comprises:

measuring downlink positioning reference signals based on the multiple frequencies indicated by the frequency configuration information; or
transmitting uplink positioning reference signals based on the multiple frequencies indicated by the frequency configuration information.

37. The terminal of claim 36, wherein after measuring the downlink positioning reference signals, the operations further comprise:
transmitting first measurement reporting information, wherein the first measurement reporting information comprises first measurement quantity information, measurement quality information and first assistance information.

38. The terminal of claim 37, wherein the first measurement quantity information comprises one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

39. The terminal of claim 37, wherein the measurement quality information comprises one or more of the following:

a carrier phase measurement quality indicator;
a variance or maximum value of carrier phase measurement error;
a signal to interference plus noise ratio (SINR);
reference signal receiving power (RSRP); or
reference signal receiving quality (RSRQ).

40. The terminal of claim 37, wherein the first assistance information comprises one or more of the following:

a cell identifier or a network device identifier corresponding to each piece of first measurement quantity information and each piece of measurement quality information;

frequency information corresponding to each piece of first measurement quantity information and each piece of measurement quality information;

a receiving antenna identifier of the target terminal or the PRU;
a reception timing error group (TEG) identifier of the target terminal or the PRU;
an identifier of the target terminal or the PRU;
location information of the PRU;
an antenna reference point (ARP) and/or phase center offset (PCO) error value of the PRU; or
an ARP/PCO error group (APEG) identifier of the PRU.

41. The terminal of any of claims 37 to 40, wherein transmitting the first measurement reporting information comprises:

the target terminal and the PRU transmit the first measurement reporting information to a location management function (LMF); or

the PRU transmits the first measurement reporting information to the target terminal.

42. The terminal of claim 41, wherein the PRU transmits the first measurement reporting information to the target terminal comprises:

the PRU transmits the first measurement reporting information to the target terminal through a sidelink between the PRU and the target terminal; or

the PRU transmits the first measurement reporting information to the target terminal through an LMF or a network device.

43. A location management function (LMF), comprising a memory, a transceiver and a processor,

wherein the memory is used for storing a computer program, the transceiver is used for receiving and transmitting data under control of the processor, and the processor is used for reading the computer program in the memory and performing the following operations:

receiving terminal capability information of a target terminal and/or a positioning reference unit (PRU), wherein the terminal capability information is used to indicate a multi-frequency processing capability of the target terminal and/or the PRU;

determining frequency configuration information for the target terminal and/or the PRU based on the terminal capability information, wherein the frequency configuration information is used for multi-frequency positioning; and

transmitting the frequency configuration information to the target terminal and/or the PRU.

44. The LMF of claim 43, wherein the multi-frequency processing capability of the target terminal and/or the PRU comprises one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

45. The LMF of claim 43 or 44, wherein the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

46. The LMF of any of claims 43 to 45, wherein determining the frequency configuration information for the target terminal and/or the PRU based on the terminal capability information comprises:

transmitting a negotiation message to a first network device based on the terminal capability information, wherein the negotiation message is used to indicate the first network device to determine the frequency configuration information for the target terminal or the PRU; and

receiving the frequency configuration information for the target terminal or the PRU transmitted from the first network device.

47. The LMF of any of claims 43 to 46, wherein after determining the frequency configuration information for the target terminal and/or the PRU, the operations further comprise:
transmitting the frequency configuration information for the target terminal and/or the PRU to a second network device.

48. The LMF of any of claims 43 to 47, wherein after transmitting the frequency configuration information to the target terminal and/or the PRU, the operations further comprise:

receiving first measurement reporting information transmitted from the target terminal and/or the PRU, wherein the first measurement reporting information comprises first measurement quantity information, measurement quality information and first assistance information; and/or,

receiving second assistance information transmitted from a first network device and a second network device.

49. The LMF of claim 48, wherein the first measurement quantity information comprises one or more of the following:

a phase of arrival (POA) measurement quantity of a same receiving antenna of a terminal at different frequencies;

a single differential phase difference of arrival (PDOA) measurement quantity or relative signal phase difference (RSPD) measurement quantity of a same receiving antenna of a terminal at different frequencies;

a single differential PDOA measurement quantity or RSPD measurement quantity of a same network device at different frequencies; or

a double differential PDOA measurement quantity of different receiving antennas of a terminal and different network devices at different frequencies.

50. The LMF of claim 48, wherein the measurement quality information comprises one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

51. The LMF of claim 48, wherein the first assistance information comprises one or more of the following:

a cell identifier or a network device identifier corresponding to each piece of first measurement quantity information and each piece of measurement quality information;
frequency information corresponding to each piece of first measurement quantity information and each piece of measurement quality information;
a receiving antenna identifier of the target terminal or the PRU;
a reception timing error group (TEG) identifier of the target terminal or the PRU;
an identifier of the target terminal or the PRU;
location information of the PRU;
an antenna reference point (ARP) and/or phase center offset (PCO) error value of the PRU; or
an ARP/PCO error group (APEG) identifier of the PRU.

52. The LMF of claim 48, wherein the second assistance information comprises one or more of the following:

a cell identifier or a network device identifier of a network device;
a transmit antenna identifier of a network device;
a transmission timing error group (TEG) identifier of a network device;
an antenna reference point (ARP) and/or phase center offset (PCO) error value of a network device; or
an ARP/PCO error group (APEG) identifier of a network device.

53. The LMF of any of claims 48 to 52, wherein the operations further comprise:
solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) identifier of a network device.

54. The LMF of claim 48 or 52, wherein after receiving the second assistance information transmitted from the first network device and the second network device, the operations further comprise:
transmitting the second assistance information to the target terminal.

55. The LMF of any of claims 43 to 47, wherein after transmitting the frequency configuration information to the target terminal and/or the PRU, the operations further comprise:

receiving second measurement reporting information transmitted from a network device, wherein the second measurement reporting information comprises second measurement quantity information, measurement quality information and third assistance information; and
receiving fourth assistance information transmitted from the target terminal and/or the PRU.

56. The LMF of claim 55, wherein the second measurement quantity information comprises one or more of the following:

a phase of arrival (POA) measurement quantity of a same network device receiving antenna at different frequencies;
a single differential phase difference of arrival (PDOA) measurement quantity or relative signal phase difference (RSPD) measurement quantity of a same network device receiving antenna at different frequencies;
a single differential PDOA measurement quantity or RSPD measurement quantity of a same terminal at different frequencies; or
a double differential PDOA measurement quantity of different network device receiving antennas and different terminals at different frequencies.

57. The LMF of claim 55, wherein the measurement quality information comprises one or more of the following:

a carrier phase measurement quality indicator;
a variance or maximum value of carrier phase measurement error;
a signal to interference plus noise ratio (SINR);
reference signal receiving power (RSRP); or
reference signal receiving quality (RSRQ).

58. The LMF of claim 55, wherein the third assistance information comprises one or more of the following:

a cell identifier or a network device identifier of the network device;

a receiving antenna identifier of the network device;
a reception timing error group (TEG) identifier of the network device;
an antenna reference point (ARP) and/or phase center offset (PCO) error value of the network device; or
an ARP/PCO error group (APEG) identifier of the network device.

59. The LMF of claim 55, wherein the fourth assistance information comprises one or more of the following:

a transmit antenna identifier of the target terminal or the PRU;
a transmission timing error group (TEG) identifier of the target terminal or the PRU;
an identifier of the target terminal or the PRU;
location information of the PRU;
an antenna reference point (ARP) and/or phase center offset (PCO) error value of the PRU; or
an ARP/PCO error group (APEG) identifier of the PRU.

60. The LMF of any of claims 55 to 59, wherein the operations further comprise:
solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) identifier of the network device.

61. A first network device, comprising a memory, a transceiver and a processor,
wherein the memory is used for storing a computer program, the transceiver is used for receiving and transmitting data under control of the processor, and the processor is used for reading the computer program in the memory and performing the following operations:

determining frequency configuration information for a target terminal and/or a positioning reference unit (PRU), wherein the frequency configuration information is used for multi-frequency positioning; and
transmitting the frequency configuration information to the target terminal and/or the PRU.

62. The first network device of claim 61, wherein determining the frequency configuration information for the target terminal and/or the PRU comprises:

receiving a negotiation message transmitted from a location management function (LMF), wherein the negotiation message is used to indicate a first network device to determine the frequency configuration information for the target terminal or the PRU; and
determining the frequency configuration information for the target terminal or the PRU based on the negotiation message.

63. The first network device of claim 61 or 62, wherein after determining the frequency configuration information for the target terminal and/or the PRU, the operations further comprise:
transmitting the frequency configuration information for the target terminal and/or the PRU to a location management function (LMF) and a second network device.

64. The first network device of any of claims 61 to 63, wherein after transmitting the frequency configuration information to the target terminal and/or the PRU, the operations further comprise:
transmitting second measurement reporting information to a location management function (LMF), wherein the second measurement reporting information comprises second measurement quantity information, measurement quality information and third assistance information.

65. An apparatus for multi-frequency positioning, comprising:

a first transmitting unit, used for a target terminal and/or a positioning reference unit (PRU) to transmit terminal capability information to a first positioning node, wherein the terminal capability information is used to indicate a multi-frequency processing capability of the target terminal and/or the PRU; and
a first receiving unit, used for receiving frequency configuration information transmitted from the first positioning node, and performing multi-frequency positioning based on multiple frequencies indicated by the frequency configuration information.

66. The apparatus of claim 65, wherein the multi-frequency processing capability of the target terminal and/or the PRU comprises one or more of the following:

a frequency range, a frequency band or a carrier supported by the target terminal and/or the PRU;
all frequencies in a first frequency range, a first frequency band or a first carrier supported by the target terminal and/or the PRU;
a center frequency in a first frequency range, a first frequency band or a first carrier supported by the target terminal and/or the PRU; or
a frequency set supported by the target terminal and/or the PRU.

67. The apparatus of claim 65 or 66, wherein the terminal capability information transmitted from the PRU is further used to indicate one or more of the following:

a capability of the PRU supporting an antenna reference point (ARP) and/or phase center offset (PCO) absolute error;
a capability of the PRU supporting an ARP/PCO error group (APEG); or
a mapping relationship between an APEG identifier corresponding to the PRU and an APEG value.

68. The apparatus of any of claims 65 to 67, wherein performing the multi-frequency positioning based on the multiple frequencies indicated by the frequency configuration information comprises:

measuring downlink positioning reference signals based on the multiple frequencies indicated by the frequency configuration information; or
transmitting uplink positioning reference signals based on the multiple frequencies indicated by the frequency configuration information.

69. The apparatus of claim 68, wherein after measuring the downlink positioning reference signals, the first transmitting unit is further used for:
transmitting first measurement reporting information, wherein the first measurement reporting information comprises first measurement quantity information, measurement quality information and first assistance information.

70. The apparatus of claim 69, wherein the first measurement quantity information comprises one or more of the following:

a phase of arrival (POA) measurement quantity of a same receiving antenna of a terminal at different frequencies;
a single differential phase difference of arrival (PDOA) measurement quantity or relative signal phase difference (RSPD) measurement quantity of a same receiving antenna of a terminal at different frequencies;
a single differential PDOA measurement quantity or RSPD measurement quantity of a same network device at different frequencies; or
a double differential PDOA measurement quantity of different receiving antennas of a terminal and different network devices at different frequencies.

71. The apparatus of claim 69, wherein the measurement quality information comprises one or more of the following:

a carrier phase measurement quality indicator;
a variance or maximum value of carrier phase measurement error;
a signal to interference plus noise ratio (SINR);
reference signal receiving power (RSRP); or
reference signal receiving quality (RSRQ).

72. The apparatus of claim 69, wherein the first assistance information comprises one or more of the following:

a cell identifier or a network device identifier corresponding to each piece of first measurement quantity information and each piece of measurement quality information;
frequency information corresponding to each piece of first measurement quantity information and each piece of measurement quality information;
a receiving antenna identifier of the target terminal or the PRU;
a reception timing error group (TEG) identifier of the target terminal or the PRU;
an identifier of the target terminal or the PRU;

location information of the PRU;

an antenna reference point (ARP) and/or phase center offset (PCO) error value of the PRU; or

an ARP/PCO error group (APEG) identifier of the PRU.

73. The apparatus of any of claims 69 to 72, wherein transmitting the first measurement reporting information comprises:

the target terminal and the PRU transmit the first measurement reporting information to a location management function (LMF); or

the PRU transmits the first measurement reporting information to the target terminal.

74. The apparatus of claim 73, wherein the PRU transmits the first measurement reporting information to the target terminal comprises:

the PRU transmits the first measurement reporting information to the target terminal through a sidelink between the PRU and the target terminal; or

the PRU transmits the first measurement reporting information to the target terminal through an LMF or a network device.

75. An apparatus for multi-frequency positioning, comprising:

a second receiving unit, used for receiving terminal capability information of a target terminal and/or a positioning reference unit (PRU), wherein the terminal capability information is used to indicate a multi-frequency processing capability of the target terminal and/or the PRU;

a first determining unit, used for determining frequency configuration information for the target terminal and/or the PRU based on the terminal capability information, wherein the frequency configuration information is used for multi-frequency positioning; and

a second transmitting unit, used for transmitting the frequency configuration information to the target terminal and/or the PRU.

76. The apparatus of claim 75, wherein the multi-frequency processing capability of the target terminal and/or the PRU comprises one or more of the following:

a frequency range, a frequency band or a carrier supported by the target terminal and/or the PRU;

all frequencies in a first frequency range, a first frequency band or a first carrier supported by the target terminal and/or the PRU;

a center frequency in a first frequency range, a first frequency band or a first carrier supported by the target terminal and/or the PRU; or

a frequency set supported by the target terminal and/or the PRU.

77. The apparatus of claim 75 or 76, wherein the terminal capability information of the PRU is further used to indicate one or more of the following:

a capability of the PRU supporting an antenna reference point (ARP) and/or phase center offset (PCO) absolute error;

a capability of the PRU supporting an ARP/PCO error group (APEG); or

a mapping relationship between an APEG identifier corresponding to the PRU and an APEG value.

78. The apparatus of any of claims 75 to 77, wherein determining the frequency configuration information for the target terminal and/or the PRU based on the terminal capability information comprises:

transmitting a negotiation message to a first network device based on the terminal capability information, wherein the negotiation message is used to indicate the first network device to determine the frequency configuration information for the target terminal or the PRU; and

receiving the frequency configuration information for the target terminal or the PRU transmitted from the first network device.

79. The apparatus of any of claims 75 to 78, wherein the second transmitting unit is further used for:

transmitting the frequency configuration information for the target terminal and/or the PRU to a second network device.

80. The apparatus of any of claims 75 to 79, wherein the second receiving unit is further used for:

receiving first measurement reporting information transmitted from the target terminal and/or the PRU, wherein the first measurement reporting information comprises first measurement quantity information, measurement quality information and first assistance information; and/or, receiving second assistance information transmitted from a first network device and a second network device.

81. The apparatus of claim 80, wherein the first measurement quantity information comprises one or more of the following:

a phase of arrival (POA) measurement quantity of a same receiving antenna of a terminal at different frequencies; a single differential phase difference of arrival (PDOA) measurement quantity or relative signal phase difference (RSPD) measurement quantity of a same receiving antenna of a terminal at different frequencies; a single differential PDOA measurement quantity or RSPD measurement quantity of a same network device at different frequencies; or a double differential PDOA measurement quantity of different receiving antennas of a terminal and different network devices at different frequencies.

82. The apparatus of claim 80, wherein the measurement quality information comprises one or more of the following:

a carrier phase measurement quality indicator; a variance or maximum value of carrier phase measurement error; a signal to interference plus noise ratio (SINR); reference signal receiving power (RSRP); or reference signal receiving quality (RSRQ).

83. The apparatus of claim 80, wherein the first assistance information comprises one or more of the following:

a cell identifier or a network device identifier corresponding to each piece of first measurement quantity information and each piece of measurement quality information; frequency information corresponding to each piece of first measurement quantity information and each piece of measurement quality information; a receiving antenna identifier of the target terminal or the PRU; a reception timing error group (TEG) identifier of the target terminal or the PRU; an identifier of the target terminal or the PRU; location information of the PRU; an antenna reference point (ARP) and/or phase center offset (PCO) error value of the PRU; or an ARP/PCO error group (APEG) identifier of the PRU.

84. The apparatus of claim 80, wherein the second assistance information comprises one or more of the following:

a cell identifier or a network device identifier of a network device; a transmit antenna identifier of a network device; a transmission timing error group (TEG) identifier of a network device; an antenna reference point (ARP) and/or phase center offset (PCO) error value of a network device; or an ARP/PCO error group (APEG) identifier of a network device.

85. The apparatus of any of claims 80 to 84, wherein the apparatus further comprises:
a solving unit, used for solving a location of the target terminal based on at least one of the first measurement reporting information, the second assistance information, pre-obtained location information of a network device, an antenna reference point (ARP) and/or phase center offset (PCO) error of a network device, or an ARP/PCO error group (APEG) identifier of a network device.

86. The apparatus of claim 80 or 84, wherein the second transmitting unit is further used for:
transmitting the second assistance information to the target terminal.

87. The apparatus of any of claims 75 to 79, wherein the second receiving unit is further used for:

receiving second measurement reporting information transmitted from a network device, wherein the second measurement reporting information comprises second measurement quantity information, measurement quality information and third assistance information; and

receiving fourth assistance information transmitted from the target terminal and/or the PRU.

88. The apparatus of claim 87, wherein the second measurement quantity information comprises one or more of the following:

a phase of arrival (POA) measurement quantity of a same network device receiving antenna at different frequencies;

a single differential phase difference of arrival (PDOA) measurement quantity or relative signal phase difference (RSPD) measurement quantity of a same network device receiving antenna at different frequencies;

a single differential PDOA measurement quantity or RSPD measurement quantity of a same terminal at different frequencies; or

a double differential PDOA measurement quantity of different network device receiving antennas and different terminals at different frequencies.

89. The apparatus of claim 87, wherein the measurement quality information comprises one or more of the following:

a carrier phase measurement quality indicator;

a variance or maximum value of carrier phase measurement error;

a signal to interference plus noise ratio (SINR);

reference signal receiving power (RSRP); or

reference signal receiving quality (RSRQ).

90. The apparatus of claim 87, wherein the third assistance information comprises one or more of the following:

a cell identifier or a network device identifier of the network device;

a receiving antenna identifier of the network device;

a reception timing error group (TEG) identifier of the network device;

an antenna reference point (ARP) and/or phase center offset (PCO) error value of the network device; or

an ARP/PCO error group (APEG) identifier of the network device.

91. The apparatus of claim 87, wherein the fourth assistance information comprises one or more of the following:

a transmit antenna identifier of the target terminal or the PRU;

a transmission timing error group (TEG) identifier of the target terminal or the PRU;

an identifier of the target terminal or the PRU;

location information of the PRU;

an antenna reference point (ARP) and/or phase center offset (PCO) error value of the PRU; or

an ARP/PCO error group (APEG) identifier of the PRU.

92. The apparatus of any of claims 87 to 91, wherein the apparatus further comprises:

a solving unit, used for solving a location of the target terminal based on at least one of the second measurement reporting information, the fourth assistance information, pre-obtained location information of the network device, an antenna reference point (ARP) and/or phase center offset (PCO) error of the network device, or an ARP/PCO error group (APEG) identifier of the network device.

93. An apparatus for multi-frequency positioning, comprising:

a second determining unit, used for determining frequency configuration information for a target terminal and/or a positioning reference unit (PRU), wherein the frequency configuration information is used for multi-frequency positioning; and

a third transmitting unit, used for transmitting the frequency configuration information to the target terminal and/or the PRU.

94. The apparatus of claim 29, wherein determining the frequency configuration information for the target terminal and/or the PRU comprises:

receiving a negotiation message transmitted from a location management function (LMF), wherein the negotiation message is used to indicate a first network device to determine the frequency configuration information for the target terminal or the PRU; and

determining the frequency configuration information for the target terminal or the PRU based on the negotiation message.

95. The apparatus of claim 29 or 30, wherein the third transmitting unit is further used for:
transmitting the frequency configuration information for the target terminal and/or the PRU to a location management function (LMF) and a second network device.

96. The apparatus of any of claims 29 to 31, wherein the third transmitting unit is further used for:
transmitting second measurement reporting information to a location management function (LMF), wherein the second measurement reporting information comprises second measurement quantity information, measurement quality information and third assistance information.

97. A computer-readable storage medium storing a computer program that causes a computer to perform the method of any of claims 1 to 10, or perform the method of any of claims 11 to 28, or perform the method of any of claims 29 to 32.

A target terminal and/or a positioning reference unit (PRU) transmits terminal capability information to a first positioning node, where the terminal capability information is used to indicate a multi-frequency processing capability of the target terminal and/or the PRU — 100

↓

Receiving frequency configuration information transmitted from the first positioning node, and performing multi-frequency positioning based on multiple frequencies indicated by the frequency configuration information — 101

FIG. 1

Receiving terminal capability information of a target terminal and/or a positioning reference unit (PRU), where the terminal capability information is used to indicate a multi-frequency processing capability of the target terminal and/or the PRU — 200

↓

Determining frequency configuration information for the target terminal and/or the PRU based on the terminal capability information, where the frequency configuration information is used for multi-frequency positioning — 201

↓

Transmitting the frequency configuration information to the target terminal and/ or the PRU — 202

FIG. 2

Determining frequency configuration information for a target terminal and/or a positioning reference unit (PRU), where the frequency configuration information is used for multi-frequency positioning — 300

Transmitting the frequency configuration information to the target terminal and/or the PRU — 301

FIG. 3

Terminal

Processor — 400

Memory — 420

Bus interface

Transceiver — 410

User interface — 430

FIG. 4

Location management function (LMF)

~500

Processor

~520

Memory

Bus interface

~510

Transceiver

FIG. 5

First network device

~600

Processor

~620

Memory

Bus interface

~610

Transceiver

FIG. 6

~700

First transmitting unit

~710

First receiving unit

FIG. 7

| Second receiving unit | | First determining unit | | Second transmitting unit |
|---|---|---|---|---|

800     810     820

FIG. 8

| Second determining unit | | Third transmitting unit |
|---|---|---|

900     910

FIG. 9

## INTERNATIONAL SEARCH REPORT

International application No.

**PCT/CN2023/111919**

| A. | CLASSIFICATION OF SUBJECT MATTER |
| --- | --- |

H04W 64/00(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, ENTXT, VEN, WPABS: 定位, 多频带, 多频点, 多频段, 能力, 配置, 位置管理功能, 载波相位定位, 定位参考单元, LMF, CPP, location management function, carrier phase, capability, frequecy, multi+ point, PRU, position+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114286330 A (HUAWEI TECHNOLOGIES CO., LTD.) 05 April 2022 (2022-04-05) description, paragraphs [0005]-[0096] | 1-97 |
| A | CN 111669257 A (HUAWEI TECHNOLOGIES CO., LTD.) 15 September 2020 (2020-09-15) entire document | 1-97 |
| A | WO 2022155244 A2 (IDAC HOLDINGS, INC.) 21 July 2022 (2022-07-21) entire document | 1-97 |
| A | QUALCOMM INC. "Signalling and Procedures for supporting Positioning Reference Units" *3GPP TSG-RAN WG3 Meeting #113-e R3-213399*, 27 August 2021 (2021-08-27), entire document | 1-97 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **17 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111919**

| Patent document cited in search report | | | Publication date (day/month/year) | Patent family member(s) | | | Publication date (day/month/year) |
|---|---|---|---|---|---|---|---|
| CN | 114286330 | A | 05 April 2022 | WO | 2022063258 | A1 | 31 March 2022 |
| | | | | KR | 20230078763 | A | 02 June 2023 |
| CN | 111669257 | A | 15 September 2020 | WO | 2020177521 | A1 | 10 September 2020 |
| WO | 2022155244 | A2 | 21 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210970532